# EUROPÄISCHE PATENTSCHRIFT

(11) **EP 3 284 611 B1**
(45) Veröffentlichungstag und Bekanntmachung des Hinweises auf die Patenterteilung: **30.09.2020**
(21) Anmeldenummer: 17185309.6
(22) Anmeldetag: 08.08.2017
(51) Int. Cl.: B42D 15/02, B42D 25/351, G09C 5/00, B42D 25/47, G09F 3/02

(54) **DOKUMENT ZUM AUSSPÄHSICHEREN ÜBERMITTELN EINER VERTRAULICHEN INFORMATION**
DOCUMENT FOR COMMUNICATING CONFIDENTIAL INFORMATION WITH ACCESS PROTECTION
DOCUMENT DESTINÉ À TRANSMETTRE UNE INFORMATION CONFIDENTIELLE DE MANIÈRE SÉCURISÉE CONTRE L'ESPIONNAGE

(30) Priorität: 19.08.2016 DE 102016115428
(43) Veröffentlichungstag der Anmeldung: 21.02.2018
(73) Patentinhaber: Schreiner Group GmbH & Co. KG, 85764 Oberschleissheim (DE)
(72) Erfinder: Schnapauff, Kai, 85354 Freising (DE)
(74) Vertreter: Epping - Hermann - Fischer

(56) Entgegenhaltungen:
- WO-A1-2009/103021
- DE-A1-102014 108 818
- US-B1- 6 357 799

## Beschreibung

Die vorliegende Anmeldung betrifft ein Dokument zum ausspähsicheren Übermitteln einer vertraulichen Information. In unterschiedlichsten Branchen und Anwendungsgebieten werden Dokumente, insbesondere Schriftstücke, Drucksachen, Anschreiben, Briefe oder Druckvorlagen benötigt, mit denen vertrauliche Informationen ausspähsicher, d.h. unter bestmöglicher Wahrung der erforderlichen Geheimhaltung übermittelbar sind. Insbesondere Banken, Telekommunikationsanbieter, IT-Unternehmen, aber auch Versicherungen und sonstige Dienstleister und Anbieter benötigen speziell gestaltete Dokumente, beispielsweise um damit Kontonummern bzw. Bankverbindungen (Bankleitzahl bzw. IBAN- und SWIFT/BIC-Nummer), Versicherungsnummern, Mitgliedsnummern, Teilnehmernummern, Passwörter, Kennwörter oder sonstige Zugangscodes bzw. persönliche Identifizierungscodes (Personal Identification Number, PIN) dem bestimmungsgemäßen Empfänger auf dem Postweg oder jedenfalls in schriftlicher bzw. gedruckter Form mitzuteilen. Das übersandte Dokument muss so beschaffen sein, dass derartige personenbezogene und/oder anwendungsbezogene vertrauliche Daten möglichst nicht durch Unbefugte ausspähbar sind.

Zu den in betrügerischer Absicht praktizierten Ausspähmethoden zur Kenntniserlangung von vertraulichen Daten gehört beispielsweise, Schriftstücke zu durchleuchten, zu fotografieren und/oder zu scannen, insbesondere unter Verwendung starker Lichtquellen wie etwa dem Blitzlicht einer Digitalkamera. Danach wird das unbearbeitet häufig nicht lesbare Durchleuchtungsbild oder sonstige Abbild des Dokuments mit Hilfe eines Computers und geeigneter Bildbearbeitungssoftware nachbearbeitet mit dem Ziel, die enthaltene vertrauliche Information auszuspähen bzw. am Monitor sichtbar zu machen und von übrigen Bildbestandteilen zu isolieren; beispielsweise durch Variation von Helligkeit, Kontrast oder Sättigung oder durch sonstige Bildbearbeitungsschritte am Durchleuchtungsbild des Dokuments.

Auch wenn mehrere Seiten oder Blätter eines Dokuments mit verschiedenem Textinhalt gemeinsam, d.h. aufeinanderliegend durchleuchtet werden, ist oft die PIN oder die sonstige vertrauliche Information durch geeignete Nachbearbeitung übriger Textbestandteile des Dokuments, weil diese meist standardisiert sind und durch Abfangen gleichartiger Schriftsätze einsehbar sind, aus dem durchleuchteten Überlagerungsmuster ermittelbar; durch rechnerische Subtraktion solcher bekannter Textbestandteile ist die vertrauliche Information auch von ungeöffneten und unbeschädigten Briefen und sonstigen Dokumenten ausspähbar. Das Dokument DE 10 2014 108 818 A1 beschreibt ein ausspähsicheres Dokument, das mit einem Störmuster versehen ist. Selbst wenn das Dokument oder sein Umschlag mit einem Störmuster, etwa einem Kontrastmuster auf der Innenseite eines Umschlags versehen ist, lassen sich Störmusterkonturen, beispielsweise solche, die von anderweitigen Schriftsendungen erlangt worden sind, mit Hilfe geeigneter Bildbearbeitungssoftware ggfs. rechnerisch von der Kontur des vertraulichen Kennworts, Passworts oder sonstigen personenbezogenen Codes separieren. Es besteht das Bedürfnis, solche missbräuchlichen Spähversuche zu erschweren.

Es ist die Aufgabe der vorliegenden Anmeldung, ein zum ausspähsicheren Übermitteln vertraulicher Informationen geeignetes Dokument bereitzustellen, das eine erhöhte Sicherheit gegen Ausspähversuche, insbesondere solche auf der Basis einer Durchleuchtung und einer anschließenden Bildbearbeitung bietet. Insbesondere für den Versand auf dem Postweg oder die zwischenzeitliche, unbeaufsichtigte Lagerung von Dokumenten, die eine geheimhaltungsbedürftige oder anderweitig vertrauliche Information enthalten, soll ein besserer Schutz erzielt werden.

Diese Aufgabe wird durch das Dokument gemäß Anspruch 1 gelöst.

Einige exemplarische Ausführungsbeispiele werden nachstehend mit Bezug auf die Figuren beschrieben. Es zeigen:
- Figur 1: eine schematische Draufsicht auf ein Ausführungsbeispiel eines gemäß dieser Anmeldung ausgebildeten Dokuments,
- Figur 2: eine schematische Querschnittsansicht des Dokuments aus Figur 1 gemäß einer ersten Ausführungsform,
- Figur 3: eine schematische Querschnittsansicht des Dokuments aus Figur 1 gemäß einer zweiten Ausführungsform,
- Figur 4: eine erste konkretisierte Ausführungsform zu Figur 3,
- Figur 5: eine zweite konkretisierte Ausführungsform zu Figur 3,
- die Figuren 6A und 6B: zwei schematische Querschnittsansichten eines jeweiligen Dokuments mit einer vertraulichen Information auf der Außenseite eines Etiketts und mit einem Störmuster im Bereich eines unteren Etikettenteils,
- Figur 7: eine schematische, ausschnittweise Querschnittsansicht eines Dokuments, das ein Oberetikett mit einer vertraulichen Information und ein Unteretikett mit einem Störmuster aufweist,
- Figur 8: eine schematische Querschnittsansicht eines Dokuments mit einem aus einem Papierbogen oder einer sonstigen Druckunterlage herausreißbaren Störmuster,
- die Figuren 9A bis 9C: mehrere gegenüber Figur 8 abgewandelte Ausführungsformen mit verschiedenen als Spähschutzelement dienenden Schichten,
- Figur 10: eine schematische Draufsicht auf das Dokument aus Figur 7,
- Figur 11: eine schematische Draufsicht auf das Dokument aus Figur 8 oder 9A bis 9C,
- die Figuren 12A bis 12F: exemplarische Gestaltungsweisen von Captcha-Bildern, um Zeichenketten alphanumerischer Zeichen einer vertraulichen Informationen ausspähsicher zu übermitteln,
- Figur 13: eine exemplarische Anordnung grafischer Stör- oder Zusatzelemente für ein Captcha-Bild und
- Figur 14: ein basierend auf Figur 13 gebildetes Captcha-Bild, in dem eine vertrauliche Information aus mehreren Buchstaben lediglich moderat verfremdet dargestellt ist, und
- Figur 15: ein Ausführungsbeispiel eines Dokuments, bei dem sowohl ein Captcha-Bild mit der vertraulichen Information als auch ein Spähschutzelement auf einer Druckunterlage statt auf einem Etikett angeordnet sind.

Gemäß dieser Anmeldung wird ein Dokument zum ausspähsicheren Übermitteln einer vertraulichen Information vorgeschlagen, wobei das Dokument zumindest Folgendes aufweist: Eine blattförmige oder anderweitig flächige Druckunterlage aus Papier, Folie oder einem sonstigen Material oder Materialverbund; eine ausspähsicher zu übermittelnde vertrauliche Information, die in einem dafür vorgesehenen Feld oder Flächenbereich des Dokuments oder der Druckunterlage oder eines anderen Teils des Dokuments aufgedruckt oder in sonstiger Weise aufgebracht ist, sowie mindestens ein zum Schutz gegen Durchleuchten oder anderweitiges Ausspähen der vertraulichen Information dienendes Schutzelement. Zusätzlich zur eigentlichen, geheimhaltungsbedürftigen Information kann noch eine auf der Druckunterlage abgedruckte oder in sonstiger Weise aufgebrachte Mitteilung in Textform vorgesehen sein; etwa als Fließtext. Das Schutzelement wird nachstehend Spähschutzelement genannt; es kann etwa ein Störmuster oder eine durchleuchtungssichere und/oder blickdichte Schicht oder Beschichtung sein. Die aufgedruckte oder anderweitig aufgebrachte vertrauliche Information und das Spähschutzelement sind übereinanderliegend und/oder einander überdeckend angeordnet. Insbesondere überspannen die Flächenabmessungen des Spähschutzelements vollständig einen für die vertrauliche Information vorgesehenen Flächenbereich. Dabei kann das Spähschutzelement (in bestimmungsgemäßer Betrachtungsrichtung auf das Dokument gesehen) vor oder hinter der vertraulichen Information, also beispielsweise oberhalb oder unterhalb der vertraulichen Information angeordnet sein.

Die vertrauliche Information umfasst eine Abfolge mehrerer Zeichen, insbesondere alphanumerischer Zeichen. Gemäß dieser Anmeldung ist insbesondere vorgesehen, dass die mehreren Zeichen der vertraulichen Information in Form eines Captcha-Bildes und/oder als Bestandteile eines Captcha-Bildes ausgebildet sind. Der Aufdruck oder die sonstige Abbildung der vertraulichen Information enthält somit selbst bereits grafische Variationen bezüglich der Darstellung der jeweiligen alphanumerischen Zeichen, die zur vertraulichen Information gehören. Selbst wenn der Abdruck der vertraulichen Information außer den alphanumerischen Zeichen keine zusätzlichen grafischen Elemente enthält, können die alphanumerischen Zeichen beispielsweise unterschiedlich positioniert und/oder verzerrt abgedruckt sein. Die visuelle Überlagerung mit einem darüber oder darunter liegenden Spähschutzelement, insbesondere während des Versands des noch ungeöffneten Dokuments, erschwert Manipulationsversuche deutlich, mit denen versucht werden könnte, die Umrisse bzw. Konturen der Bestandteile der vertraulichen Information von Umrissen bzw. Konturen des Spähschutzelements zu unterscheiden.

Zwar sind - bei Betrachtung des Captcha-Bildes allein - die im Captcha-Bild enthaltenen, mit Informationsgehalt behafteten Bestandteile (nämlich die alphanumerischen Zeichen der vertraulichen Information, d.h. Buchstaben, Zahlen und/oder Sonderzeichen; insbesondere solche einer handelsüblichen Computertastatur) durch den Leser des geöffneten Dokuments bzw. Betrachter des Captcha allein noch relativ leicht aus dem Captcha-Bild ablesbar. Bei Spähversuchen hingegen, bei denen das Dokument insgesamt durchleuchtet wird und nur ein Überlagerungsbild aus dem Captcha-Bild und dem Spähschutzelement (beispielsweise einem solchen mit einem Störmuster oder einer durchleuchtungssicheren, wahlweise unterbrochenen oder lückenlosen Schicht) gewonnen und digital nachbearbeitet wird, führt der in Form eines Captcha-Bildes gestaltete Abdruck der vertraulichen Information zu einer signifikanten Erschwernis, wenn nicht gar zur völligen Unkenntlichmachung der verborgenen vertraulichen Information. Für ein Ausspähen dieser Information aus einem Überlagerungs- oder Durchleuchtungsbild werden bei der Bildbearbeitung häufig Annahmen hinsichtlich der zu erwartenden Position, Darstellungsweise und Gliederung der auszuspähenden vertraulichen Information gemacht und in die digitale Nachbearbeitung mit eingebracht.

Herkömmlich enthalten Schriftstücke, die für verschiedene Adressaten bestimmt sind, zwar jeweils unterschiedliche vertrauliche Informationen wie z.B. Kontonummern, jedoch sind diese bislang in einheitlicher Darstellungsweise hinsichtlich Schriftgröße, Position, Schriftart usw. auf den jeweiligen Schriftstücken abgedruckt. Dies gilt zumindest für die Schriftstücke eines konkreten Dienstleisters oder Händlers, einer konkreten Art des Anschreibens oder sonstigen Dokuments und/oder bei einer bestimmten Art der vertraulichen Information. Die Kenntnis der verwendeten Darstellungsweise der vertraulichen Informationen in einer bestimmten Art von Schriftstück eines Dienstleisters kann herkömmlich leicht erlangt werden und erleichtert das Ausspähen der alphanumerischen Zeichen.

Bei dem hier vorgeschlagenen Dokument ist jedoch vorgesehen, dass die die vertrauliche Information ergebenden alphanumerischen Zeichen in variierter, d.h. individuell unterschiedlicher oder zumindest in uneinheitlicher Darstellung auf dem Dokument enthalten sind. Vorzugsweise sind die Zeichen, die zu der abzulesenden vertraulichen Information zusammenzusetzen sind, in Form eines Captcha-Bildes oder als Bestandteil eines solchen vorgesehen. Dadurch werden selbst bei unbefugter Einsichtnahme in ein ähnliches, gleichartiges Dokument Rückschlüsse auf ein noch nicht geöffnetes, lediglich durchleuchtetes Dokument vereitelt oder jedenfalls erheblich erschwert, weil nicht mehr vorhersagbar ist, wo und in welcher Darstellungsweise in dem Captcha-Bild die jeweiligen alphanumerischen Zeichen zu vermuten oder zu suchen sind. Dadurch fehlen ausreichend zuverlässige Hilfsannahmen, die für eine auf das Ausspähen abzielende Bildbearbeitung erforderlich wären. Ausspähversuche werden somit vereitelt, insbesondere bei realistischem Personaleinsatz und/oder Rechenzeiten und/oder verfügbaren Rechenleistungen. Insbesondere werden Ausspähversuche sinnlos, die von einem festen, einheitlichen Design der Einzelzeichen der vertraulichen Information ausgehen.

Insbesondere ist vorgesehen, dass zumindest einer oder mehrere der nachfolgend aufgezählten Parameter variiert, d.h. für die Zeichenbestandteile der vertraulichen Information unterschiedlich oder jedenfalls uneinheitlich gewählt sind: Der Abstand und/oder Höhenversatz zum vorangehenden und/oder nachfolgenden Zeichen, die Schriftgröße bzw. Schrifthöhe, Laufweite, Schriftart, Schriftstärke, Schriftlage, Konturen, Orientierung (d.h. Verdrehung innerhalb der Zeichenebene), die Höhenposition bezogen auf einen (beispielsweise unteren) Rand des Captcha-Bildes, eine lokale Stauchung, Dehnung oder sonstige Verzerrung des alphanumerischen Zeichens, eine Überlappung oder grafische Verschmelzung mit benachbarten Zeichenbestandteilen der vertraulichen Information oder mit sonstigen grafischen Elementen, insbesondere mit Verschleierungs- oder Störelementen des Captcha-Bildes selbst (beispielsweise Durchkreuzungslinien, Hintergrundstrukturen, Störpixel oder sonstige grafischen Elemente, die die vertrauliche Information oder ihre alphanumerischen Zeichen umgeben, an sie heranreichen oder sie überschneiden). Die obige Aufzählung ist nicht abschließend; es können beliebige Parameter, insbesondere grafische, d.h. visuelle Parameter variiert werden, die die Darstellung und/oder Erkennbarkeit der alphanumerischen Zeichen und/oder der vertraulichen Information insgesamt innerhalb des Captcha-Bildes beeinflussen. Das mit der vertraulichen Information versehene Captcha-Bild kann insbesondere ein Schwarz-Weiß-Bild bzw. ein einfarbiges Bild sein; es kann insbesondere ein Bild aus in einer vorgegebenen Farbe gestalteten Flächenanteilen und weiteren Flächenanteilen, die schwarz, weiß oder farblos sind, gebildet sein.

Das Captcha-Bild kann ferner aus transparenten und intransparenten (oder jedenfalls weniger transparenten) Bildbestandteilen aufgebaut sein; insbesondere kann jede im Captcha-Bild vorkommende einfarbige Teilfläche wahlweise transparent oder intransparent sein. Beispielsweise kann eine intransparente Farbe bzw. Druckfarbe des Captcha-Bildes auf einen Papierbogen oder eine sonstige intransparente oder auch transparente Druckunterlage aufgedruckt sein, wobei die (Druck-)Farbe eine gegenüber der Farbe des Papierbogens oder der sonstigen Druckunterlage abweichende, beispielsweise kontrastierende Farbe besitzt. Ferner können auch fotografische Elemente in dem Captcha-Bild enthalten sein; insbesondere können auch Farben bzw. Bereiche mittlerer Helligkeits- und/oder Transparenzgrade in Bildbestandteilen des Captcha enthalten sein. So können unter den Zeichen der vertraulichen Information Zeichen mittleren Helligkeitsgrades und/oder mittleren Transparenzgrades vorkommen.

Die vertrauliche Information im Sinne dieser Anmeldung ist vorzugsweise eine solche Information, die zur Identifizierung einer Person, Firma oder sonstigen Institution oder zur Erlangung oder Gewährung einer Zutritts-, Zugangs- und/oder Zugriffsberechtigung verwendbar ist. Dabei kann es sich um eine einmalig verwendbare Information handeln, aber auch um eine solche Information, die wiederholt, beispielsweise beliebig oft wiederverwendbar ist. Insbesondere ist unter der vertraulichen Information eine alphanumerische Zeichenkette zu verstehen, die als Passwort, Kennwort, Zugangscode, Identifizierungscode (PIN bzw. ID-Code) oder zu sonstigen Zwecken von einem Benutzer, dem sie zugewiesen worden ist, wiederholt verwendbar ist, um sich bei seinen geplanten Handlungen jeweils zu autorisieren.

Die Abfolge alphanumerischer oder sonstiger Zeichen, die die vertrauliche Information bildet oder jedenfalls darin enthalten ist, ist in zweifacher Weise gegen unbefugtes Ausspähen gesichert, nämlich erstens durch das Störmuster und/oder Kontrastmuster, dessen Zeichen dazu bestimmt sind, die Zeichen der vertraulichen Information visuell zu überlagern und/oder von den Zeichen der vertraulichen Information visuell überlagert zu werden. Zweitens ist die Abfolge der Zeichen der vertraulichen Information zusätzlich auch dadurch geschützt, dass die mehreren Zeichen der vertraulichen Information in Form eines Captcha-Bildes und/oder als Bestandteile eines Captcha-Bildes aufgebracht bzw. vorgesehen sind. Indem die in dieser Weise verzerrte vertrauliche Information und das Spähschutzelement übereinanderliegend und/oder einander überdeckend angeordnet werden, wird ein unbefugtes Lesen, Ausspähen oder anderweitiges Ermitteln der vertraulichen Information weiter erschwert, denn aus einem Überlagerungsbild aus einem Captcha-Bild und einem zusätzlichen Kontrastmuster und/oder Störmuster sind die einzelnen Zeichen des Captcha-Bildes ungleich schwieriger ermittelbar, wodurch ein verbesserter Schutz vor unbefugtem Ausspähen erzielt wird.

Herkömmlich wird ein Captcha-Bild bzw. Captcha ("Completely Automated Public Turing test to tell Computers and Humans Apart") auf dem Gebiet der Computersoftware bzw. Anwendungsprogramme verwendet, nämlich um eine manuelle Eingabe eines Benutzers abzufragen, wenn eine Online-Sitzung zum Verwenden eines Computerprogramms gestartet wird. Dabei wird ein jeweiliges, stets neu erzeugtes Captcha-Bild nur vorübergehend und insbesondere nur einmalig auf dem Bildschirm, Monitor oder Display des Nutzers bzw. Interessenten angezeigt; meist nur solange, bis durch Tastendruck oder Mausklick der nächste Bildschirminhalt bzw. die nächste Computerseite angezeigt wird. Insbesondere wird ein gegebenes Captcha-Bild niemals zweimal nacheinander angezeigt, und selbst wenn nur eine begrenzte Menge an Captcha-Bildern zur Verfügung stehen sollte, würde die Reihenfolge der in den Online-Sitzungen anzuzeigenden Captcha-Bilder in möglichst unvorhersagbarer Weise variiert werden.

Im Gegensatz dazu ist bei dem Dokument gemäß dieser Anmeldung ein Captcha-Bild nicht am Computer, d.h. während einer vorübergehenden Online-Sitzung dargestellt, sondern dauerhaft in, an oder auf dem Dokument in gedruckter oder anderweitiger Form dauerhaft wiedergegeben.

Ferner kann im Unterschied zum herkömmlichen Gebrauch ein Captcha-Bild bei dieser Anmeldung eine Information mit einer eigenen inhaltlichen Bedeutung enthalten; insbesondere dann, wenn es sich um eine wiederholt verwendbare vertrauliche Information handelt. Denn eine wiederverwendbare vertrauliche Information, die nicht lediglich zu Prüfzwecken verwendet wird, verknüpft eine Zeichenkette mit einer inhaltlichen Funktion und/oder Bedeutung. Insbesondere ist die vertrauliche Information hier eine den Anwender, Benutzer, Teilnehmer oder Interessenten ganz konkret kennzeichnende Zeichenfolge, d.h. die Abfolge alphanumerischer Zeichen ist für die autorisierten Zwecke als Nachweis seiner Berechtigung verwendbar, und zwar einmalig, mehrere Male (beispielsweise n Mal) oder beliebig häufig, und zwar in jeweils identischer Form. Somit besitzt die vertrauliche Information eine eigene inhaltliche und individuelle Bedeutung für den rechtmäßigen Anwender bzw. Verwender. Die dem Adressaten zugewiesene vertrauliche Information, die gedruckt oder anderweitig auf das Dokumente als Captcha-Bild aufgebracht ist, ist somit durch den Adressaten des Dokuments verwendbar bzw. wiederverwendbar.

Noch ein weiterer Unterschied gegenüber der herkömmlichen Verwendung von Captcha-Bildern besteht darin, dass das Captcha-Bild im Rahmen dieser Anmeldung nicht zur automatisierten Unterscheidung von Menschen und Computern als Benutzern eines Programms dient, sondern dazu eingesetzt wird, in Kombination mit einem Spähschutzelement (etwa einem Störmuster oder einer sonstigen Spähschutzschicht des Dokuments) Durchleuchtungs- oder Überlagerungsbilder, die bei Ausspähversuchen gewonnen werden könnten, unauswertbar zu machen oder zumindest signifikant zu erschweren.

Im Übrigen wird in dieser Anmeldung unter einer vertraulichen Information im engeren Sinne eine Zeichenfolge verstanden, die eine konkret zugewiesene technische Funktion besitzt (etwa als Kennwort, Zugangscode usw. gemäß der Aufzählung weiter oben). Somit ist eine aus einem fortlaufenden oder sonstigen Text eines Briefs, Anschreibens oder sonstigen Dokuments gebildete Nachricht nicht als vertrauliche Information zu verstehen, auch weil eine bloße schriftliche Nachricht keine eigene technische Funktion besitzt. Dessen ungeachtet kann das Dokument außer der vertraulichen Information zusätzlich noch eine beliebige Mitteilung in Textform enthalten; diese braucht jedoch nicht notwendigerweise in gleicher Weise wie die vertrauliche Information gegen ein Ausspähen geschützt zu sein. Die bloße Textnachricht (etwa ein Fließtext) kann daher beispielsweise in zeilenweise einheitlicher Schrift oder jedenfalls in einfach lesbarer Darstellung auf dem Dokument aufgedruckt sein, beispielsweise außerhalb des Flächenbereichs, der für die vertrauliche Information bestimmt und dazu in besonderer Weise gestaltet ist.

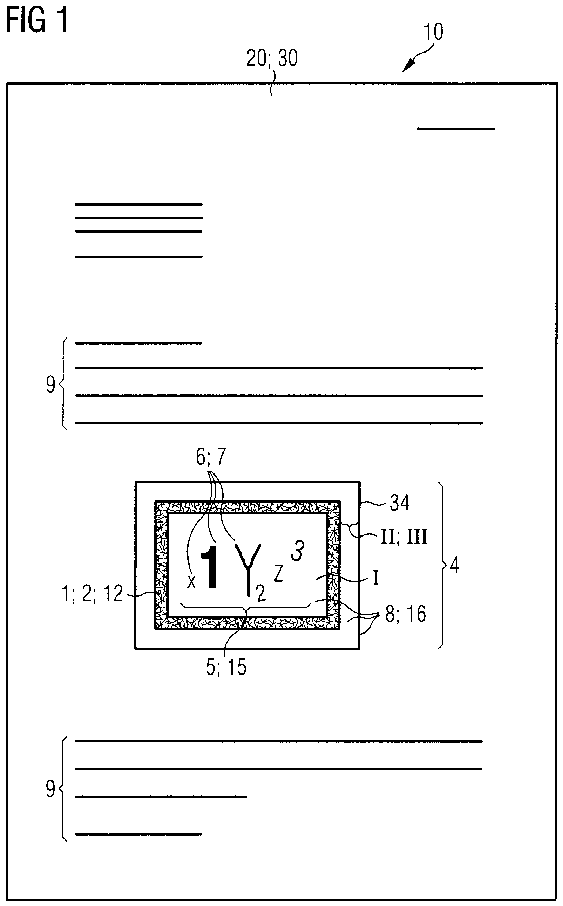

Figur 1 zeigt exemplarisch in schematischer Draufsicht ein erstes Beispiel eines Dokuments zum ausspähsicheren Übermitteln einer vertraulichen Information. Das Dokument ist beispielsweise ein Brief bzw. Anschreiben, etwa als Drucksache. Als Dokumente kommen aber ebenso Ausweise, Chipkarten usw. in Betracht. In Figur 1 ist das Dokument als Briefbogen bzw. Anschreiben dargestellt.
Das Dokumente 10 enthält alphanumerische Zeichen 6; 7 als Bestandteile eines Captcha-Bildes 15, welches beispielsweise unmittelbar auf die Druckunterlage 20 aufgedruckt oder an einem sonstigen Bestandteil des Dokuments 10, beispielsweise auf ein Etikett aufgedruckt oder anderweitig aufgebracht ist. Wenngleich in Figur 1 zur Veranschaulichung das Captcha-Bild 15 und die vertrauliche Information 5 ohne visuelle Überlagerung mit einem Störmuster und ohne Überdeckung durch eine intransparente Deckschicht oder ein sonstiges Spähschutzelement dargestellt ist, ist bei einem realen Dokument 10 die vertrauliche Information 5 bzw. Abfolge der Zeichen 6; 7 natürlich nicht ohne Weiteres sichtbar oder erkennbar. Eine weitere lediglich zur Verdeutlichung des Dokumentenaufbaus dienende Abweichung in Figur 1 besteht darin, dass ein in Blickrichtung auf das Dokument unter oder hinter dem Captcha-Bildes 15 angeordnetes Störmuster 2 bzw. Kontrastmuster 12, welches zumindest dieselbe Grundfläche bzw. zumindest den gleichen Flächenbereich I überspannt wie das Captcha-Bild 15, mit seinen lateralen Abmessungen geringfügig größer dargestellt ist als das Captcha-Bild 15 mit der Information 5. In der Realität können die Fläche und/oder die Seitenabmessungen eines Störmusters 2 bzw. Kontrastmusters 12, einer intransparenten Deckschicht oder eines sonstigen Spähschutzelements aber wahlweise größer oder lediglich genauso groß sein wie die Fläche und/oder die Seitenabmessungen des Captcha-Bildes 15.

Sofern nicht die gesamte Grundfläche des Dokuments 10 ausspähsicher gestaltet ist, kann ein Feld 34 oder Flächenbereich I vorgesehen sein, der ausspähsicher gestaltet ist. Der Flächenbereich I, in dem das Captcha-Bild 15 angeordnet ist, kann ferner an einen umlaufenden Rahmenbereich III und/oder an einen Randbereich II angrenzen. Der Rand- oder Rahmenbereich außerhalb des Flächenbereichs I kann noch zu dem Feld 34 gehören, das zur Erreichung des Ausspähschutzes in besonderer Weise gestaltet, beispielsweise mit einem Etikett versehen ist. Daher können Etiketten, Folien oder sonstige Schichten, die für die ausspähsichere Gestaltung des Dokuments im Bereich der vertraulichen Information vorhanden sind, sich auch über den angrenzenden bzw. umlaufenden Randbereich II oder Rahmenbereich III erstrecken. So ist das Dokument 10 gemäß Figur 1 beispielsweise mit einer transparenten Folie 16, insbesondere Kunststofffolie 8 realisierbar, auf der das Captcha-Bild 15 mit kleinerer Bildfläche als der Foliengrundfläche angeordnet ist.

Die ausspähsichere Gestaltung des Dokuments 10 oder seiner Druckunterlage 20 kann (statt über deren gesamte Grundfläche) auf solch ein Feld 34 beschränkt sein; etwa mittels eines Etiketts, insbesondere Spähschutzetiketts 4, dessen Außenabmessungen dem Feld 34 entsprechen und dieses definieren. Das Etikett bzw. Spähschutzetikett 4 dient als Schutz gegen unerwünschtes Ausspähen der Information 5 und überspannt zumindest den Flächenbereich I des Captcha-Bildes und ggfs. auch den Bereich II bzw. III. Das Etikett 4 ist z.B. auf die Vorderseite oder Rückseite des Papierbogens 30 oder der sonstigen Druckunterlage 20 aufgeklebt. Der Schichtaufbau über die Grundfläche des Dokuments 10 bzw. der Druckunterlage 20 insgesamt und insbesondere über den ausspähsicher gestalteten Grundflächenbereich (Flächenbereiche I, II und/oder III) ist in beliebiger Weise gestaltbar.

Das Dokument kann zusätzliche, nicht unmittelbar zur vertraulichen Information gehörigen Textbestandteile enthalten, z.B. eine Mitteilung 9 in Textform, wie sie in Figur 1 schematisch durch horizontale Linien (gemäß dem typischen Aufbau eines Anschreibens) angedeutet ist. Die optionale Mitteilung in Textform 9 ist z.B. auf einen Druckträger bzw. eine Druckunterlage 20 (Papierbogen 30, Folie oder sonstiges Material oder Verbundmaterial) vorgesehen, insbesondere aufgedruckt. Innerhalb der Grundfläche der Druckunterlage 20 ist ein Flächenbereich I vorgesehen, in dem die vertrauliche Information 5 in möglichst ausspähsicherer Art und Weise ausgebildet ist. Im Beispiel der Figur 1 ist die vertrauliche Information selbst exemplarisch als Zeichenkette bzw. Zeichenfolge "x1Y2z3" dargestellt; sie dient als Beispiel für ein Kenn- oder Passwort, einen Identifizierungs- oder Zugriffscode, eine Kontonummer oder eine sonstige Angabe (s.o.), die dem Adressaten des Dokuments 10 für die autorisierten Handlungen, etwa für die Kontoführung, die Verwendung eines Programms oder zu seiner eigenen Autorisierung für sonstige Zwecke zur Verfügung steht.

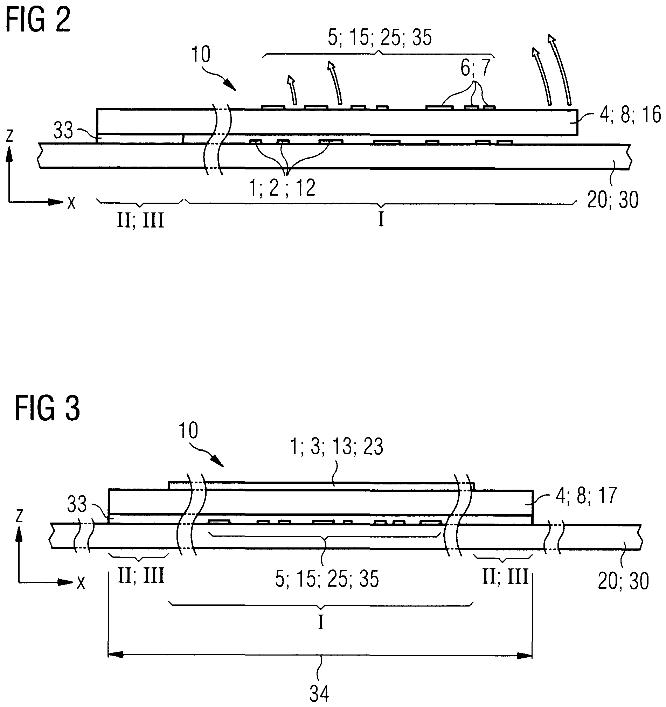

Die Figuren 2 und 3 zeigen zwei exemplarische Ausführungsformen hinsichtlich des Schichtaufbaus für die ausspähsichere Gestaltung des Flächenbereichs I bzw. des Feldes 34 bei dem Dokument 10 aus Figur 1. Figur 2 zeigt eine schematische Querschnittsansicht durch das Dokument 10 aus Figur 1 im Bereich einer Schnittlinie durch den Flächenbereich I hindurch, und zwar als Ausschnittdarstellung mit nur unvollständiger Abbildung der Druckunterlage 20 in horizontaler Richtung x. Dabei sind die Proportionen in Figur 2 nicht maßstabsgetreu und insbesondere die Schichtdicken der besseren Erkennbarkeit wegen übertrieben groß dargestellt. Gleiches gilt ebenso für die in den nachfolgenden Figuren dargestellten Querschnittsansichten.

Das Dokument 10 gemäß Figur 2 weist auf einer Seite, beispielsweise der Vorderseite der Druckunterlage 20 ein Etikett 4 mit einer transparenten Folie 16 bzw. Kunststofffolie 8 auf. Die Folie 8; 16 bzw. das Etikett 4 ist zumindest in einem Randbereich II - etwa im Bereich einer der vier Außenkanten des Flächenbereichs I - durch eine Klebstoffschicht 33 mit der Druckunterlage 20 (dem Papierbogen 30 oder einer weiteren Folie etc.) verklebt. In dem zur Unterbringung des Captcha-Bildes 15, d.h. der vertraulichen Information 5 vorgesehenen Flächenbereich I ist gemäß Figur 2 das Etikett 4 bzw. die Folie 8; 16 von der Druckunterlage 20 abhebbar, wie durch die gekrümmten Pfeile angedeutet ist. Die vertrauliche Information 5 (z.B. persönliche Daten 25), die in Form des Captcha-Bildes 15 bzw. als dessen Bestandteil ausgebildet ist, ist gemäß Figur 2 nicht auf der Druckunterlage 20, sondern auf der Außenseite des Etiketts 4 bzw. der Folie 8; 16 angeordnet, insbesondere aufgedruckt oder in sonstiger Weise aufgebracht. Zwischen der Innenseite des Etiketts 4 bzw. der Folie und der Druckunterlage 20 ist ein Spähschutzelement 1 in Form eines Störmusters 2, insbesondere Kontrastmusters 12 auf die Oberfläche der Druckunterlage 20 aufgedruckt oder anderweitig aufgebracht. Das Etikett 4 bzw. seine Folie 8; 16 ist vorzugsweise transparent und entweder farblos oder farbig. Durch die Transparenz entsteht beim Betrachten von oben für den Betrachter visuell ein kombiniertes Überlagerungsbild aus dem Störmuster 2 auf der Druckunterlage und dem Captcha-Bild 15 mit den Informationen 5 bzw. Daten 25, welches auf dem Etikett 4 bzw. der Folie 8; 16 darüber aufgebracht ist. Das Spähschutzetikett 4 hält somit das Captcha-Bild 15 in einer vorgegebenen Position lagegenau relativ zu dem Störmuster 2, beispielsweise deckungsgleich bzw. mit jeweils fluchtenden Rändern des Captcha-Bild 15 und des Störmusters 2. Gemäß Figur 2 ist die Folie bzw. das Etikett 4 jedoch zumindest in dem Flächenbereich I von der Druckunterlage 20 abziehbar. Dies ermöglicht ein Betrachten des Etiketts bzw. seiner Folie vor einem anderen, visuell nicht störenden Hintergrund wie beispielsweise einem weißen Blatt Papier, einer Wand oder einer Tischfläche. Durch Abheben des mit der vertraulichen Information 5 versehenen Spähschutzetiketts 4 lässt sich diese aus dem Captcha-Bild 15 ablesen, wohingegen das sich aus dem Captcha-Bild 15 und dem Störmuster 2 ergebende Überlagerungs- oder Durchleuchtungsbild kaum noch brauchbare Ansatzpunkte für Ausspähversuche bietet. Alternativ könnte die visuelle Trennung des Captcha-Bildes 15 von dem Störmuster 2 übrigens auch dadurch geschehen, dass ein intransparentes Blatt, etwa ein Papierstreifen zwischen Etikett 4 und Druckunterlage 10 geschoben wird. Die Klebstoffschicht 33 ist in dem ersten Flächenbereich I ausgespart. Je nach Ausführungsform gehört auch noch der Rand- oder Rahmenbereich II; III zu einem Grundflächenabschnitt bzw. zu dem Feld 34, innerhalb dessen das Dokument 10 (etwa mit Hilfe des Spähschutzelements 1 und/oder des Spähschutzetiketts 4) ausspähsicher gestaltet ist.

Figur 3 zeigt eine zweite Ausführungsform des Dokuments 10 aus Figur 1 hinsichtlich des Schichtaufbaus im ausspähsicher gestalteten Flächenbereich I bzw. im Feld 34. Gemäß Figur 3 ist die vertrauliche Information 5, d.h. die Zeichenkette aus alphanumerischen Zeichen 7, zwischen einem Etikett 4 bzw. seiner transparenten Folie 17 und der Druckunterlage 20 angeordnet, beispielsweise auf die Druckunterlage 20 aufgedruckt. Zwischen Druckunterlage 20 und Etikett 4 (bzw. Folie 8; 17) ist ferner eine Klebstoffschicht 33 ausgebildet, die nicht nur im Rand- oder Rahmenbereich II; III, sondern auch im Flächenbereich I ausgebildet ist; sie verklebt das Etikett 4 bzw. die Folie 8; 17 im Bereich des ausspähsicheren Feldes 34 vollflächig mit der Druckunterlage 20. Die alphanumerischen Zeichen 7 und ggfs. die sonstigen Druckbestandteile des Captcha-Bildes 15 sind hier auf die Druckunterlage 20 oberseitig (oder alternativ daran unterseitig oder direkt unterseitig auf das Etikett 4 bzw. dessen Folie 8; 17) aufgedruckt. Auf der Außenseite des Spähschutzetiketts 4 bzw. seiner Folie 8; 17 ist als Spähschutzelement 1 eine durchleuchtungssichere und/oder blickdichte Schicht 3 vorgesehen, die als zerstörbare Schicht 13 und insbesondere als Rubbelschicht 23 ausgebildet sein kann. Durch Abrubbeln oder Abkratzen dieser Schicht auf der Außenseite des Spähschutzetiketts 4 lässt sich der Blick auf die unterhalb der Folie bzw. Kunststofffolie 8; 17 angeordnete vertrauliche Information 5 visuell freilegen; zu diesem Zweck ist die Folie 8; 17 transparent und vorzugsweise auch farblos. Grundsätzlich kann eine Kunststofffolie oder sonstige Folie, sobald sie im Rahmen der Anmeldung als transparent bezeichnet ist, auch eine durchscheinende, d.h. lediglich teiltransparente Folie sein, sofern die darunter angeordnete Information 5, d.h. das Captcha-Bild 15 noch durch die Folie hindurch erkennbar ist.

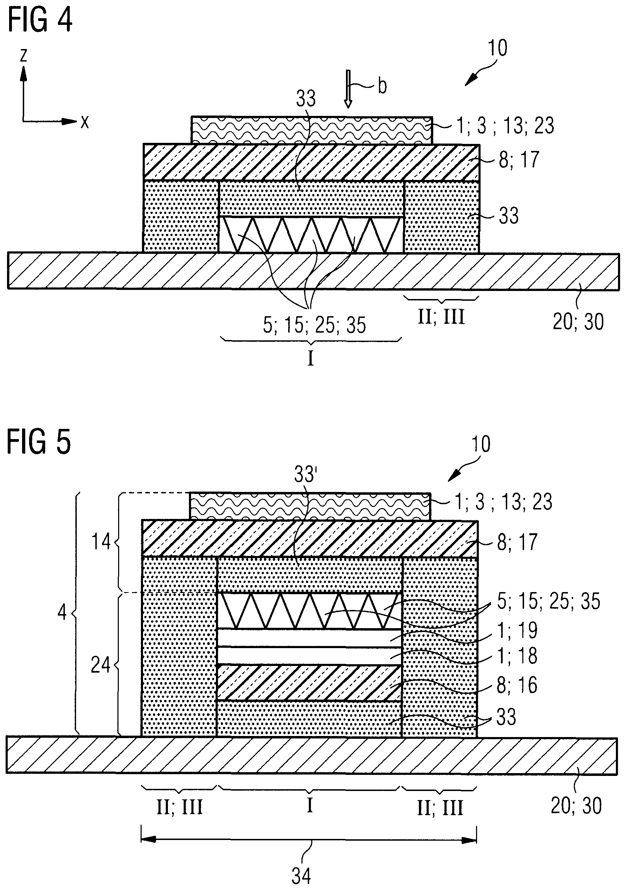

Die Figuren 4 bis 9 zeigen in schematischer Querschnittsansicht weitere exemplarische Ausführungsbeispiele von Dokumenten, bei denen die im ausspähsicher gestalteten Feld I; 34 enthaltene vertrauliche Information 5 in Form eines Captcha-Bildes 15 bzw. eines Bestandteils davon ausgebildet ist. Die Querschnittsansichten sind in Bezug auf die Grundfläche des Papierbogens 30 oder der Druckunterlage 20 (Blatt, Papierbogen, Umschlag, Folie oder in sonstiger Weise vorliegendes Schriftstück oder eine Vorlage dafür) lediglich ausschnitthaft dargestellt. Die in den Figuren 4 bis 9 jeweils nach oben weisende Fläche der Druckunterlage 20 ist beispielsweise deren Vorder- oder Oberseite. In der vertikalen Richtung z (Normalenrichtung) sind die Höhen und Schichtdicken der Bestandteile des jeweiligen Dokuments 10 allerdings aus Klarheitsgründen maßstabverzerrt, insbesondere übertrieben groß dargestellt, um die einzelnen Schichten besser erkennen zu können. In der Praxis wird der Schichtaufbau gemäß den Ausführungsbeispielen der Figuren 2 bis 9 äußerst flach und ohne auffällige Höhen- oder Dickenunterschiede (zumindest innerhalb des Feldes 34 bzw. Flächenbereichs I) ausfallen.

Gemäß Figur 4 besitzt das Dokument 10 auf einer Seite der Druckunterlage 20 eine (hier nur schematisch dargestellte) Bedruckung, d.h. einen Aufdruck 35 in Form eines Captcha-Bildes 15, das die vertrauliche Information 5 bzw. die persönlichen Daten 25 enthält. Diese sind wie bereits erwähnt aus einer Mehrzahl alphanumerischer Zeichen 6; 7 zusammengesetzt, die in unterschiedlicher bzw. uneinheitlicher Weise positioniert und grafisch gestaltet sind. Diese unterschiedliche, uneinheitliche Darstellungsweise der Einzelzeichen 6; 7 ist keine aus ästhetischen Gründen veranlasste Darstellungsweise, sondern eine solche, die die technische Funktion erfüllt, weil die in unvorhersagbarer Weise platzierten und dimensionierten alphanumerischen Zeichen 7 die Gefahr einer betrügerischen Ausspähung der vertraulichen Information 5 deutlich herabzusetzen.

Auf der Druckunterlage 20 in Figur 4 ist ein Etikett zum Schutz vor einer Ausspähung ausgebildet; dieses Spähschutz-etikett 4 umfasst hier eine transparente Folie 8; 17 vorzugsweise aus Kunststoff und eine darauf angeordnete, aber abkratzbare, abrubbelbare oder in sonstiger Weise entfernbare oder zerstörbare Schicht 3; 13; 23, die blickdicht und/oder durchleuchtungsresistent ist. Die transparente Folie 8; 17 ist durch eine Klebstoffschicht 33 mit der Druckunterlage 20 und dem Aufdruck 35 in Form des Captcha-Bildes 15 verbunden. Erst nach dem Zerstören bzw. Entfernen der blickdichten Schicht 3; 13; 23, die hier als Spähschutzelement 1 nach dem Prinzip der Figur 3 dient, wird aus der Blickrichtung b durch die Folie 8; 17 hindurch das Captcha-Bild 15 sichtbar.

Figur 5 zeigt eine weitere Ausführungsform basierend auf dem Prinzip von Figur 3. In dem Grundflächenbereich I, in dem das Captcha-Bild 15 bzw. die vertrauliche Information 5 angeordnet ist, weist das Spähschutzetikett 4 von unten nach oben (in Richtung zunehmenden Abstands von der Druckunterlage 20; 30) folgende Schichten auf: eine untere Klebstoffschicht 33 bzw. einen unteren Klebstoffschichtbereich; eine erste Kunststofffolie 8; 16, die wahlweise transparent oder intransparent ist; mindestens eine weitere blickdichte Schicht 18 und/oder 19, die zusätzlich zur oberseitigen blickdichten Schicht 3; 13; 23 aus Figur 4 vorgesehen ist; den Aufdruck 35 in Form des Captcha-Bildes 15 mit der vertraulichen Information 5; eine obere Klebstoffschicht 33' bzw. einen oberen Klebstoffschichtbereich; eine obere oder äußere Folie 17, insbesondere Kunststofffolie 8, die transparent ist; und schließlich die blickdichte Schicht 3 auf der Außenseite dieser Folie 8; 17. Seitlich außerhalb des ersten Flächenbereichs I ist zwischen der transparenten Folie 8; 17 und der ihr zugewandten Fläche der Druckunterlage 20 eine Klebstoffschicht 33 bzw. ein Klebstoffschichtbereich hinreichender Dicke ausgebildet, um den Abstand zwischen der Folie 8; 17 und der Druckunterlage 20 zu überbrücken. Ungeachtet der in den Figuren 4 und 5 übertrieben groß dargestellten Schichtdicken- und Höhenunterschiede der Klebstoffschichtbereiche seitlich am Rand des Flächenbereichs I braucht am realen Etikett die Schichtdicke der Klebstoffschicht dort nicht spürbar zu variieren; die Veränderung der Höhe bzw. Dicke der Klebstoffschicht kann somit sehr gering ausfallen. Es können eine oder mehrere blickdichte Schichten zwischen dem Captcha-Bild 15 und der Druckunterlage 20 vorgesehen sein, z.B. eine Abfolge zweier unterschiedlicher blickdichter Schichten. So können zwei blickdichte Schichten 18; 19 zwischen dem Captcha-Bild 15 und der Druckunterlage 20 vorgesehen sein, etwa eine (erste) weitere blickdichte Schicht 18, die beispielsweise schwarz ist, und/oder eine (zweite) weitere blickdichte Schicht 19. Die weitere blickdichte Schicht 19 kann beispielsweise silbern sein oder in sonstiger Weise so gestaltet sein, dass sie die Lesbarkeit der vertraulichen Information erleichtert, d.h. eine geeignete Hintergrundschicht bzw. Untergrundschicht für die vertrauliche Information darstellt. Alternativ kann lediglich eine der blickdichten Schichten 18 oder 19 vorgesehen sein. Die untere Kunststofffolie 8, die untere weitere blickdichte Schicht 18 und/oder obere weitere blickdichte Schicht 19 kann aber auch entfallen. Zumindest eine dieser drei Schichten 16, 18, 19 sollte jedoch vorgesehen sein.

Nach außen hin ist das als Aufdruck 35 oder in sonstiger Weise aufgebrachte Captcha-Bild 15 bereits wie in Figur 4 durch die zerstörbare, blickdichte Schicht 3; 13 geschützt; die optionalen Schichten 18; 19 stellen somit zusätzliche Spähschutzelemente 1 dar. Die transparenten Folien 16; 17 können gefärbt sein; ferner kann die untere Kunststofffolie 8 statt transparent auch intransparent sein. Die zerstörbare blickdichte Schicht 3; 13 kann optional ein Hologramm aufweisen; dies gilt ebenso für die Figuren 3 und 4 und alle übrigen Ausführungsformen mit intransparenten Spähschutzschichten.

Bei allen Ausführungsbeispielen dieser Anmeldung können in Rand- oder Rahmenbereichen II; III zusätzliche Sicherheitsmerkmale zum Nachweis unbefugter Manipulationsversuche, insbesondere für den Fall des Öffnens des Schichtverbunds, enthalten sein, beispielsweise VOID-Folienbereiche oder dergleichen (nicht dargestellt).

Das in Figur 5 dargestellte Spähschutzetikett 4 gliedert sich in ein Unteretikett 24, welches auf die Druckunterlage 20 geklebt ist und oberseitig mit dem Captcha-Bild 15 bedruckt oder bedeckt ist, und ein Oberetikett 14, das nach dem Aufbringen des Captcha-Bildes 15 (entweder oberseitig auf das Unteretikett 24 oder unterseitig auf das Oberetikett 14) mit dem Unteretikett 24 verklebt wird.

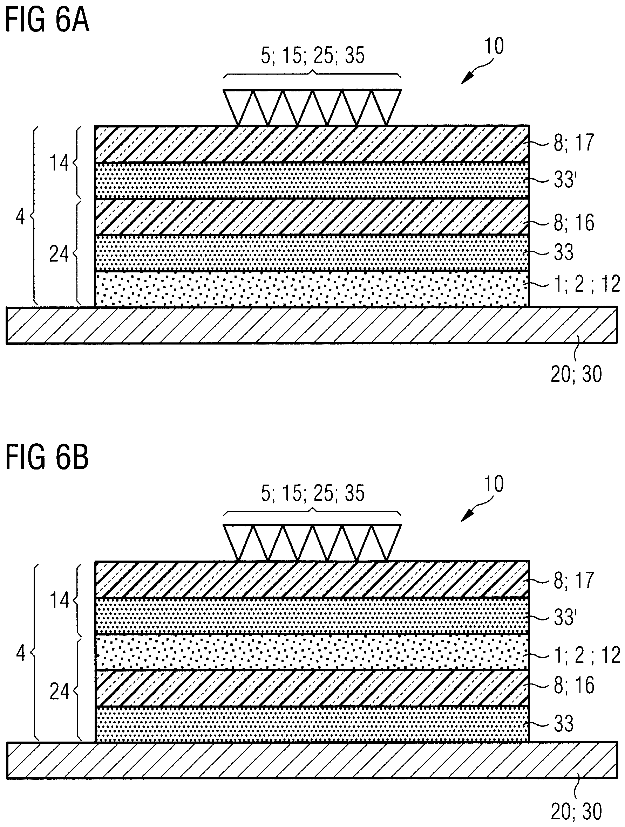

Die Figuren 6A, 6B und 7 bis 9 zeigen in Querschnittsansicht Ausführungsbeispiele eines Dokuments 10 bzw. eines dafür vorgesehen Spähschutzetiketts 4, wobei bei diesen Ausführungsbeispielen das Captcha-Bild 15 mit der vertraulichen Information 5 bestimmungsgemäß außerhalb, d.h. in Blick- oder Betrachtungsrichtung gesehen vor einem Spähschutzelement 1 angeordnet bzw. anzuordnen ist. Als Spähschutzelement 1 ist jeweils ein Störmuster 2 bzw. Kontrastmuster 12 vorgesehen, das beispielsweise unterhalb von, d.h. in Blickrichtung hinter dem Captcha-Bild 15 angeordnet ist, aber zunächst beim Betrachten des Dokuments gleichzeitig und überlagert mit dem Captcha-Bild 15 wahrgenommen wird. Erst ein Auftrennen es jeweiligen Spähschutzetiketts 4 oder der Druckunterlage 20 führt eine visuelle Trennung von Captcha-Bild 15 und Stör- bzw. Kontrastmuster 2; 12 (Hintergrundmuster) herbei, wodurch das Captcha-Bild 15 allein lesbar wird.

Gemäß den Figuren 6A und 6B ist hierzu auf der Druckunterlage 20 ein Etikett 4 vorgesehen, das oberseitig mit dem Captcha-Bild 15 bedruckt und so beschaffen ist, dass es in ein Unteretikett 24, das auf dem Papierbogen 30 oder der sonstigen Druckunterlage 20 des Dokuments 10 verbleibt, und ein Ober-etikett 14 auftrennbar ist. Das Oberetikett 14 kann vollständig abgetrennt oder zumindest flächenmäßig so weit abgezogen werden, dass das Captcha-Bild 15 über seine Grundfläche vollständig lesbar, d.h. ohne Überlagerung durch das tiefer liegende Störmuster 2 sichtbar wird. Bei Figur 6A und 6B umfasst das Unteretikett 24 jeweils eine erste, untere bzw. hintere Folie 8; 16, die gemäß Figur 6A transparent ist und bei Figur 6B wahlweise transparent oder intransparent ist. Sämtliche in der Anmeldung genannten transparenten oder intransparenten Folien können übrigens wahlweise farblos oder gefärbt sein. Das Oberetikett 14 in Figur 6A und 6B umfasst eine oberseitige, zweite Folie 8; 17, die transparent ist, mittels einer (oberen) Klebstoffschicht 33' auf das Unteretikett 24 aufgeklebt ist und den Aufdruck 35 bzw. das Captcha-Bild 15 trägt. Gemäß Figur 6A befindet sich das Stör- bzw. Kontrastmuster 2; 12 auf der Druckunterlage 20 (Papierbogen 30, Folie oder sonstiges Material oder Verbundmaterial), und die transparente Folie 8; 16 ist durch eine (untere) Klebstoffschicht 33 mit diesem Muster 2; 12 und der Druckunterlage 20 verklebt. In Figur 6B hingegen findet sich das Störmuster 2; 12 auf der von der Druckunterlage 20 abgewandten Grenzfläche der Folie 8; 16 des Unteretiketts 24 und wird von der Klebstoffschicht 33' des Oberetiketts 14 bedeckt.

Die Ausführungsbeispiele der Figuren 6A bis 9 sind insoweit vereinfacht dargestellt, als die Stör- oder Kontrastmuster 2; 12 als durchgehende Schicht statt als lateral strukturierte Muster aus vereinzelten oder jedenfalls voneinander seitlich beabstandeten Musterelementen (mit Druckstrukturen und dazwischen verbleibenden Zwischenräumen) abgebildet sind. In der Praxis werden zwischen den Kontrastelementen dieser Muster 2; 12 Zwischenräume oder Täler verbleiben, die mit der darüber angeordneten Klebstoffschicht 33 (Figur 6A) bzw. 33' (Figur 6B) bedeckt sind. Gemäß Figur 6A und 6B besitzt die Klebstoffschicht 33' des Oberetiketts 14 an der Grenze zum Unteretikett 24 eine geringere Klebkraft als die Klebstoffschicht 33 des Unteretiketts 24, sodass bei dem Abziehen der Folie 8; 17 des Oberetiketts 14 (etwa an einer seitlich überstehenden Lasche, nicht dargestellt) der Schichtaufbau des Spähschutzetiketts 14 in Höhe der Unterseite der Klebstoffschicht 33' des Oberetiketts 14 auseinanderreißt.

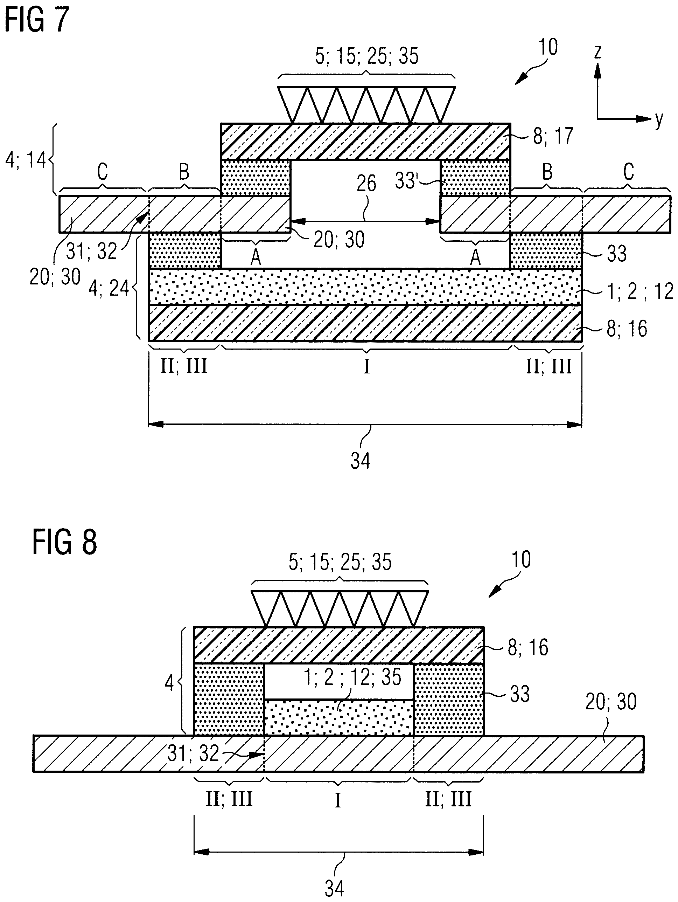

Figur 7 zeigt ein Dokument 10, dessen Papierbogen 30, Hauptfolie oder sonstige Druckunterlage 20 in dem für das Captcha-Bild 15 vorgesehenen Flächenbereich I eine Aussparung bzw. Ausnehmung 26, d.h. ein Loch besitzt. Weiterhin sind ein
Oberetikett 14 und ein Unteretikett 24, die diesen Flächenbereich I überbrücken, auf entgegengesetzten Hauptflächen der Druckunterlage 20 angeordnet und mit dieser bereichsweise verbunden, insbesondere verklebt. Bei den nachfolgenden Ausführungen zu Figur 7 sowie generell zu den Figuren 1 bis 11 sind die Begriffe oberseitig und unterseitig bzw. Oberseite und Unterseite gegeneinander übrigens austauschbar. In Figur 7 umfasst das Oberetikett 14 eine transparente Folie, insbesondere eine Kunststofffolie 8; 17 mit dem als Aufdruck 35 oder anderweitig aufgebrachten Captcha-Bild 15 auf ihrer Ober- oder Außenseite. Auf ihrer Unter- oder Innenseite ist die Folie 8; 17 mit Flächenstücken A (hier zwei streifenförmige Flächenbereiche beiderseits der Aussparung 26) durch eine Klebstoffschicht 33' verklebt. Das Unteretikett 24, d.h. das von der entgegengesetzten Seite der Druckunterlage 20 auf diese aufgeklebte Etikett umfasst ebenfalls eine (Kunststoff-)Folie 8; 16, die vorzugsweise transparent ist, und ein zwischen dieser und dem Oberetikett 14 angeordnetes Stör- oder Kontrastmuster 2; 12. Das Unteretikett 24 ist durch eine Klebstoffschicht 33 mit zwei Flächenstücken B der Druckunterlage 20 verbunden, die beiderseits der Ausnehmung 26 angeordnet sind - hier z.B. seitlich außerhalb der Flächenstücke A, aber noch innerhalb des vom Etikett 4 unbedeckten Flächenbereichs C, der außerhalb des ausspähsicheren Feldes 34 angeordnet ist. Auch das Unteretikett 24 oder zumindest seine Folie 8; 16 sowie sein Stör- oder Kontrastmuster 2; 12 überspannt die Aussparung 26 in dem Flächenbereich I des Captcha-Bildes 15.

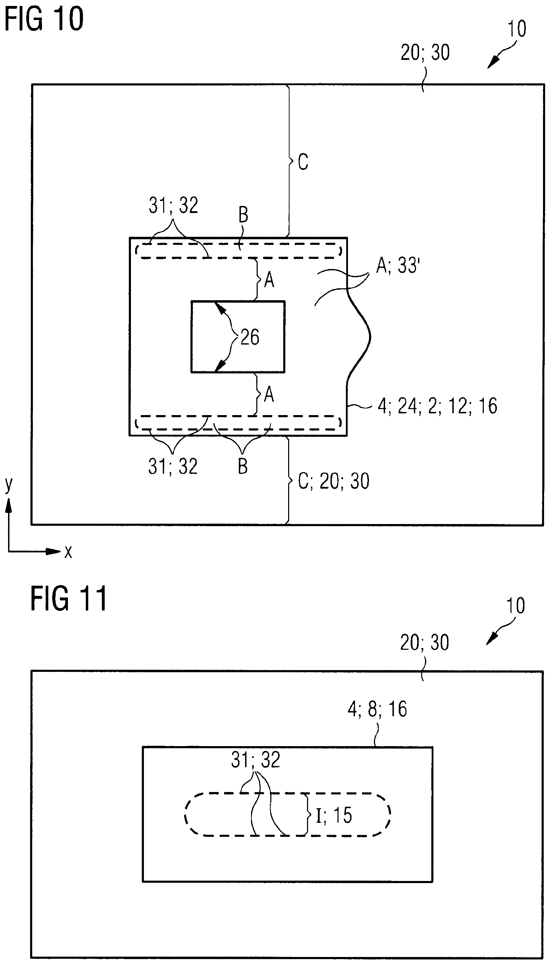

Zwischen dem mit dem Oberetikett 14 oberseitig überklebten Flächenstück A und dem jeweiligen benachbarten, mit dem Unteretikett 24 rückseitig beklebten Flächenstück B verlaufen jeweils Perforierungen 31 oder sonstige Schwächungslinien 32. Diese Perforierungen 31 bzw. Schwächungslinien 32 sind ebenfalls zwischen dem jeweiligen Flächenstück B und dem benachbarten Flächenstück A vorgesehen; sie umlaufen jeweils das linke und rechte Flächenstück B, wie noch nachstehend anhand von Figur 10 erläutert wird, überbrücken aber nicht den lateralen Abstand zwischen beiden Flächenstücken B in Richtung y.

Eine schematische Draufsicht auf das Dokument 10 gemäß Figur 7 ist in Figur 10 dargestellt. In Figur 10 ist der Verlauf der hier exemplarisch länglich-ovalen, im Gesamtverlauf jeweils geschlossenen Schwächungs- oder Perforationslinien 31; 32 um die beiden Flächenstücke B der Druckunterlage 20 herum erkennbar. Ferner ist die (hier z.B. annähernd quadratische) Außenkontur des Unteretiketts 24 dargestellt; Figur 10 zeigt somit eine Draufsicht von unten her bzw. aus Richtung des Unteretiketts 24 auf den Papierbogen 30 oder die sonstige Druckunterlage 20 des Dokuments 10. Wird das Unteretikett 24 entlang der Perforierungen 31 von dem Rest der Druckunterlage 20 abgezogen, entstehen zusätzliche Ausnehmungen bzw. Aussparungen im Bereich der Flächenstücke B, wohingegen das Flächenstück A (umfassend u.a. die beiden in Figur 7 dargestellten Teilstücke A in Höhe beiderseits der Aussparung 26) unversehrt erhalten bleibt und mit dem äußeren Flächenstück C an zwei Seiten verbunden bleibt. Das Flächenstück A trägt auch weiterhin das Oberetikett 14, dessen transparente Folie 8; 17 wiederum das Captcha-Bild 15 trägt. Das Captcha-Bild 15 ist jedoch nun allein, d.h. ohne visuelle Überlagerung mit dem Störmuster 2 lesbar, da das Unteretikett 24, das das Störmuster enthält, gemeinsam mit den Flächenstücken B abgezogen wurde. Alternativ zu von den Figuren 7 und 10 kann das Dokument 10 auch in Richtung z spiegelverkehrt aufgebaut sein, sodass ein vorderseitiges Oberetikett abziehbar ist, wohingegen ein in Richtung y schmaleres (oder wahlweise breiteres) Unteretikett an der Druckunterlage 20 verbleibt. Je nachdem, ob das Captcha-Bild 15 bzw. die darin versteckte vertrauliche Information 5 (aufgebaut aus der Folge alphanumerischer Zeichen 7) spiegelverkehrt aufgedruckt ist oder nicht, kann dieses wahlweise zum Lesen von der Vorderseite oder von der Rückseite des Dokuments 10 (bzw. seiner Druckunterlage 20) her bestimmt sein. Dies gilt für sämtliche in der Anmeldung behandelten Ausführungsformen. Grundsätzlich können daher die alphanumerischen Zeichen 6; 7 des Captcha-Bildes stets wahlweise spiegelverkehrt gedruckt bzw. dargestellt sein. Ferner können die Zeichen 6; 7 als Aussparungen der Druckfarbe, d.h. schwarz-weiß-invertiert dargestellt sein (Inversdruck).

Figur 8 zeigt ein Dokument 10, dessen Etikett 4 eine Folie 8; 16 aufweist, die das Captcha-Bild 15 trägt (z.B. außen oder alternativ auf ihrer Innenseite), aber lediglich in Rand- oder Rahmenbereichen III; II, d.h. seitlich außerhalb des Flächenbereichs I des Captcha-Bildes 15 mit der Druckunterlage 20 verklebt ist. Entlang des Außenrandes des Flächenbereichs I ist die Druckunterlage 20 wiederum perforiert oder anderweitig geschwächt (Perforierungen 31; 32) und dort herausreißbar, wodurch das Etikett 4 von seiner Rück- oder Unterseite her freigelegt wird. Der abziehbare innere Flächenbereich der Druckunterlage 20 ist daher nicht mit dem Etikett 4 und insbesondere nicht mit dessen Folie 8; 16 verklebt, sondern lediglich oberseitig bzw. lediglich einseitig mit einem Spähschutzelement 1, d.h. einem Stör- oder Überlagerungsmuster 2; 12 versehen, insbesondere bedruckt. Zwischen dem Überlagerungsmuster 2; 12 und der Unterseite der Etikettenfolie 4; 8; 16 besteht keine klebende Verbindung, sondern lediglich ein (ggfs. luftgefüllter) Abstand. Die transparente Kunststofffolie 8; 16 führt bei der optischen Wahrnehmung des Captcha-Bildes 15 zu einer visuellen Überlagerung mit dem Überlagerungsmuster 2; 12, solange der mit dem Überlagerungsmuster 2; 12 bedeckte Flächenbereich I der Druckunterlage 20 noch nicht herausgerissen ist. Erst nach dem Herausreißen kann das Captcha-Bild 15 mit der vertraulichen Information 5 isoliert und unverfälscht betrachtet werden.

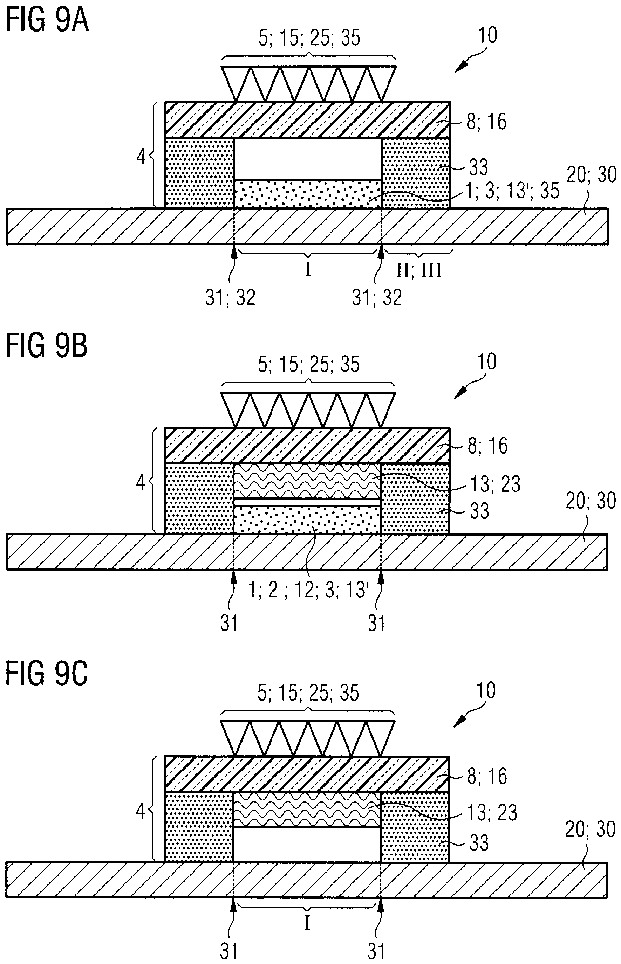

Figur 9A zeigt eine Abwandlung gegenüber Figur 8, bei der anstelle des Stör- oder Überlagerungsmusters eine herausreißbare, blickdichte Schicht 3; 13' als Spähschutzelement 1 vorgesehen ist; sie ist auf den ausreißbaren Flächenbereich I der Druckunterlage 20 aufgebracht, beispielsweise darauf aufgedruckt. Die herausreißbare bzw. blickdichte Schicht 3; 13' schützt vor einem Ausspähen des Captcha-Bildes 15 aus der Richtung der Druckunterlage 20 her (d.h. in Figur 9A von unten her) und ist dadurch herausreißbar, dass der innerhalb der Perforationslinien 31 befindliche Flächenbereich I der Druckunterlage 20 ausgerissen wird. Die herausreißbare bzw. blickdichte Schicht 3; 13' kann beispielsweise eine Druckschicht, d.h. eine Bedruckung eines herausreißbaren Flächenbereichs I des Dokuments 10 und/oder der Druckunterlage 20 sein, wie in Figur 9A dargestellt ist. Alternativ kann sie eine Nachbarschicht oder Deckschicht solch eines herausreißbaren Flächenbereichs I sein. Weiterhin kann die blickdichte Schicht 3; 13' alternativ auch eine einzeln herausreißbare, blickdichte Schicht sein.

Bei all diesen Ausführungsformen kann die blickdichte Schicht 3; 13' wahlweise eine vollständig, d.h. als Ganzes herausreißbare, ausreißbare oder aufreißbare Schicht sein oder eine lediglich partiell, d.h. nur teilweise oder bereichsweise herausreißbare, ausreißbare oder aufreißbare Schicht. Es genügt somit, wenn die blickdichte Schicht 3; 13' ein auf- oder ausreißbares Teilstück bzw. einen aus- oder aufreißbaren Teilflächenbereich aufweist.

Die Figuren 9B und 9C zeigen weitere gegenüber Figur 8 abgewandelte Ausführungsformen. Gemäß Figur 9B ist auf der Unter- bzw. Innenseite der Etikettenfolie 8; 16 eine zerstörbare Schicht 13, beispielsweise eine Rubbelschicht 23 bzw. abrubbelbare Schicht vorgesehen. Auf der ihr zugewandten Seite der Druckunterlage 20 befindet sich ferner ein weiteres Spähschutzelement 1, das durch Herausreißen des innerhalb der Perforationslinien 31 befindlichen Flächenbereichs der Druckunterlage 20 entfernbar ist. Das herausreißbare weitere Spähschutzelement 1; 13' ist beispielsweise eine Störmuster- bzw. Kontrastmusterschicht 2; 12 wie in Figur 8 oder alternativ eine blickdichte Schicht 3 wie in Figur 9A. Erst nach dem Entfernen dieser Schicht 2; 12 bzw. 3 durch Herausreißen des darunter befindlichen Flächenbereichs der Druckunterlage 20 wird die zerstörbare Schicht 13; 23 zugänglich und kann abgerubbelt bzw. abgekratzt werden.

Gemäß Figur 9C ist wie in Figur 9B auf der Unterseite der Etikettenfolie 8; 16 die zerstörbare Schicht 13 bzw. Rubbelschicht 23 vorgesehen. Zwischen dieser Schicht 13; 23 und der ihr zugewandten Seite der Druckunterlage 20 befindet sich jedoch kein weiteres Spähschutzelement, insbesondere keine weitere Spähschutzschicht. Die Schicht 13; 23 liegt daher lose auf oder über der Druckunterlage 20; ggfs. mit geringem Luftspalt zwischen ihnen (in Figur 9C übertrieben dick dargestellt). Durch Herausreißen des Flächenbereichs I der Druckunterlage 20 wird die Schicht 13; 23 zugänglich und kann dann von der transparenten Folie 8; 16 abgerubbelt bzw. abgekratzt werden.

Figur 11 zeigt eine schematische Draufsicht auf die Grundfläche der Druckunterlage 20 eines Dokuments 10 gemäß einer der Figuren 8 oder 9A bis 9C. Wie in Figur 11 erkennbar ist, verläuft die Perforations- oder Schwächungslinie 31; 32 innerhalb der Außenkontur des Etiketts 4. Die (hier länglich-oval dargestellte) Außenkontur des ausreißbaren Flächenstücks umfasst den Flächenbereich I des Captcha-Bildes 15; durch Herausreißen des mittigen Flächenbereichs I der Druckunterlage 20 wird das Captcha-Bildes 15 von unten her freigelegt.

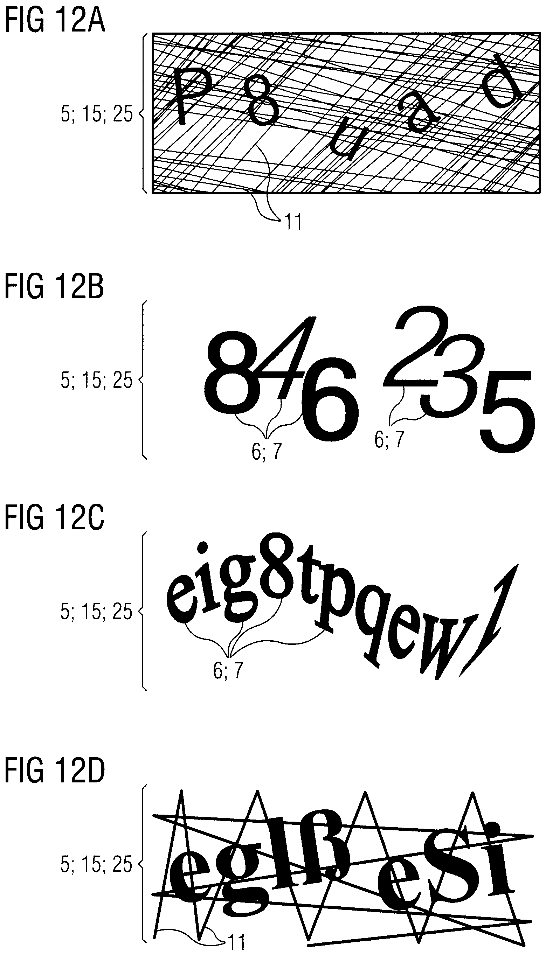

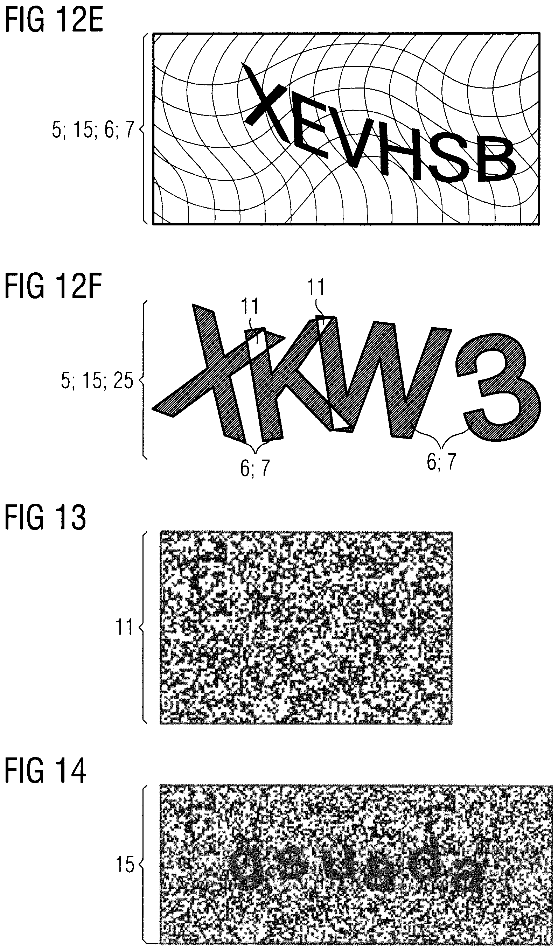

Die Figuren 12A bis 12F zeigen schematisch und rein exemplarisch in vergrößerter Darstellung Beispiele für Captcha-Bilder 15, die eine Abfolge bzw. eine Zeichenkette aus mehreren Zeichen 6, insbesondere alphanumerischen Zeichen 7 enthalten, die die abzulesende vertrauliche Information 5 bilden. Die Captcha-Bilder 15 können, wie in den Figuren 12A, 12D, 12E und 12F gezeigt, zusätzlich zu den alphanumerischen Zeichen 7 auch grafische Zusatzelemente 11 enthalten - hier beispielsweise gerade, gezackte oder wellenförmige Linien oder kontrastinvertierte Bereiche in Überschneidungsflächen benachbarter Einzelzeichen 7. Gemäß Figur 12B oder 12C können ferner die Schriftgröße, Höhenposition, Kursivneigung, Strichstärke, Schriftart, Verzerrung, Orientierung und/oder sonstige grafische Eigenschaften der jeweiligen alphanumerischen Zeichen 6; 7 individuell für jedes Zeichen 7 oder zumindest innerhalb der Zeichenkette uneinheitlich gewählt werden. Die Variationsbreite möglicher Designveränderungen ist nicht durch die Beispiele der Figuren 12A bis 12F eingeschränkt; diese dienen nur zur Veranschaulichung.

Figur 13 zeigt eine Anordnung pixelartiger grafischer Zusatzelemente und Figur 14 zeigt ein aus solchen grafischen Zusatzelementen und einer vertraulichen Information 5 gebildetes Captcha-Bild 15. Aus diesem Captcha-Bild 15 lässt sich zwar noch die Abfolge der alphanumerischen Zeichen, nämlich exemplarisch die Folge von Kleinbuchstaben g, s, u, a, d und a herauslesen. Sobald jedoch diesem Captcha-Bild 15 ein darüber oder darunter liegendes weiteres Störmuster 1; 2; 12 visuell überlagert wird, wie es bei den Ausführungsarten dieser Anmeldung und insbesondere durch die Spähschutzetiketten 4 geschieht, entsteht ein Überlagerungsbild, bei dem die zur vertraulichen Information 5 gehörigen alphanumerischen Zeichen nicht mehr als solche identifizierbar sind, wenn z.B. für die Bildbearbeitung eine einheitliche Höhenposition und Orientierung der Buchstaben vorausgesetzt wird. Insbesondere dann, wenn ein Störmuster 1; 2; 12 gewählt wird, das selbst alphanumerischen Zeichen enthält, sind die alphanumerischen Zeichen 6; 7 der vertraulichen Information 5 des Captcha-Bildes 15 nicht mehr von den alphanumerischen Zeichen des Stör- oder Überlagerungsmusters 2; 12 unterscheidbar; vor allem wenn die Darstellung der Einzelzeichen 7 stärker variiert wird als in Figur 14 dargestellt. In Figur 14 sind die Einzelbuchstaben lediglich individuell leicht verkippt und gegenüber der gemeinsamen Grundlinie leicht vertikal verschoben. Werden die Einzelzeichen jedoch stärker über den Flächenbereich I verteilt und/oder stärker verfremdet (etwa durch kombinierte Verfremdungseffekte wie in den Figuren 12A bis 12E dargestellt), so ist die Erkennbarkeit der alphanumerischen Zeichen der vertraulichen Information 5 deutlich herabgesetzt, sobald das Captcha-Bild 15 visuell mit einem zusätzlichen Störmuster 2 bzw. Kontrastmuster 12 kombiniert wird, das ebenfalls alphanumerische Zeichen enthält. Insbesondere eine Unterscheidung von alphanumerischen Zeichen eines solchen separaten Musters 2; 12, die ebenfalls über dessen Grundfläche verteilt sind, ist dann kaum noch möglich, weil weder eine klare Grundlinie noch ein sonstiger Hinweis für die Position der selektiv auszulesenden, weil zur vertraulichen Information 5 gehörigen alphanumerischen Zeichen 7 mehr möglich ist.

Die Ausgestaltung der vertraulichen Information 5 in Form eines Captcha-Bildes 15 gemäß dieser Anmeldung eignet sich somit auch für Dokumente mit solchen Stör- oder Kontrastmustern 2; 12, die ihrerseits selbst eine Mehrzahl alphanumerischer Zeichen aufweisen. Diese können insbesondere über die Grundfläche des Stör- oder Kontrastmusters 2; 12 beliebig verteilt sein. Bei einem herkömmlichen Dokument 10 sind die alphanumerischen Zeichen 7 in dem für die vertrauliche Information 5 vorgesehenen Flächenbereich in vorhersehbarer Weise angeordnet; gewöhnlich auf einer geraden, horizontalen Grundlinie in der Mitte des Flächenbereichs I und in einer einheitlichen Schriftart und Schriftgröße etc. Während also ein herkömmliches Dokument nur begrenzten Schutz vor den oben beschriebenen Ausspähmethoden bietet, werden die Erfolgsaussichten solcher Ausspähmethoden durch Dokumente, die gemäß den Ausführungsformen dieser Anmeldung ausgebildet sind, zunichte gemacht oder zumindest erheblich verringert.

Bei sämtlichen Ausführungsformen, die in dieser Anmeldung beschrieben, abgebildet oder beansprucht sind, kann daher vorgesehen sein, dass - soweit ein Störmuster 2 vorgesehen ist - dieses ebenfalls alphanumerische Zeichen aufweist, also beispielsweise Buchstaben, Zahlen und/oder Sonderzeichen, etwa solche gängiger Computertastaturen.

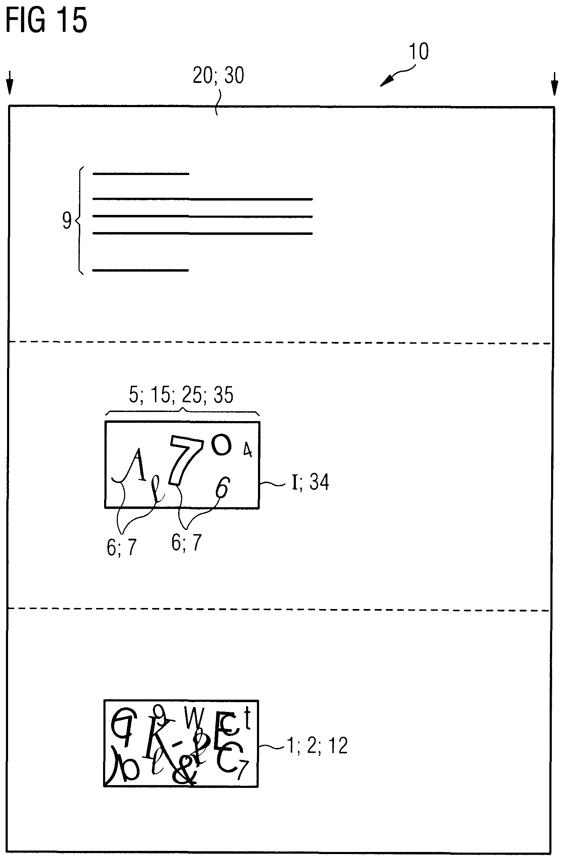

Figur 15 zeigt ein Ausführungsbeispiel eines Dokuments 10 zum ausspähsicheren Übermitteln einer vertraulichen Information 5, bei dem sowohl die vertrauliche Information 5 in Form des Captcha-Bildes 15 als auch das Spähschutzelement 1 auf der Druckunterlage 20 (z.B. einem Papierbogen 30) angeordnet, insbesondere aufgedruckt sind. Hierbei ist kein eigenes Etikett 4 mehr erforderlich. Das Spähschutzelement 1 kann beispielsweise ein Stör- oder Überlagerungsmuster 2; 12 sein, insbesondere ein solches Stör- oder Überlagerungsmuster 2; 12, das selbst eine Vielzahl alphanumerischer Zeichen enthält. In einem Durchleuchtungs- bzw. Überlagerungsbild sind daher die alphanumerischen Zeichen 6; 7 der vertrauliche Information 5 von denjenigen des Stör- oder Überlagerungsmusters 2; 12 nicht mehr unterscheidbar oder trennbar, weil keine Ansatzpunkte mehr für Vermutungen hinsichtlich der zu erwartenden Position der Bestandteile der vertraulichen Information 5 sind. Wird der Papierbogen 30 oder die sonstige Druckunterlage 20 daher entlang der gestrichelten Linien gefaltet, kommen die Grundflächen des Spähschutzelements 1; 2; 12 und des Captcha-Bildes 15 zur Deckung.

An Außenkanten, etwa entlang der dargestellten Pfeile, können die Ränder der gefalteten Druckunterlage 20 dann für den Postversand zusammengeklebt werden; ferner können Perforationen (nicht dargestellt) zum beidseitigen Abreißen der Kantenbereiche vorgesehen sein. Figur 15 ist lediglich exemplarisch für eine Vielfalt denkbarer Dokumente, bei denen die Ausspähbarkeit einer vertrauliche Information 5 ohne Zuhilfenahme eines Etiketts herabgesetzt ist, vorzugsweise unter Verwendung eines Spähschutzelements 1 bzw. Stör- oder Überlagerungsmusters 2; 12, das selbst alphanumerische Zeichen enthält.

Ein Stör- oder Kontrastmuster 2; 12, das eine Vielzahl alphanumerischer Zeichen enthält (z.B. wie in Figur 15 exemplarisch dargestellte Muster 2; 12) kann ebenso bei allen anderen in dieser Anmeldung beschriebenen, abgebildeten oder beanspruchten Ausführungsformen, wo ebenfalls ein Stör- oder Kontrastmuster 2; 12 vorgesehen ist, verwendet werden.

### Bezugszeichenliste

- 1: Spähschutzelement
- 2: Störmuster
- 3: blickdichte Schicht
- 4: Spähschutzetikett
- 5: vertrauliche Information
- 6: Zeichen
- 7: alphanumerisches Zeichen
- 8: Kunststofffolie
- 9: Mitteilung in Textform
- 10: Dokument
- 11: grafisches Element
- 12: Kontrastmuster
- 13: zerstörbare Schicht
- 13': herausreißbare Schicht
- 14: Oberetikett
- 15: Captcha-Bild
- 16: transparente Folie
- 17: transparente Folie
- 18: erste weitere blickdichte Schicht
- 19: zweite weitere blickdichte Schicht
- 20: Druckunterlage
- 23: Rubbelschicht
- 24: Unteretikett
- 25: persönliche Daten
- 26: Ausnehmung
- 30: Papierbogen
- 31: Perforierung
- 32: Schwächungslinie
- 33; 33': Klebstoffschicht
- 34: Feld
- 35: Aufdruck
- A, B, C: Flächenstück
- b: Betrachtungsrichtung
- I: Flächenbereich
- II: Randbereich
- III: Rahmenbereich
- x: erste laterale Richtung
- y: zweite laterale Richtung
- z: senkrechte Richtung

## Patentansprüche

1. Dokument (10) zum ausspähsicheren Übermitteln einer vertraulichen Information (5), wobei das Dokument (10) zumindest Folgendes aufweist:
- eine blattförmige oder anderweitige flächige Druckunterlage (20) aus Papier, Folie oder einem sonstigen Material oder Materialverbund,
- eine ausspähsicher zu übermittelnde vertrauliche Information (5), die in einem Feld (34) oder Flächenbereich (I) des Dokuments (10) oder der Druckunterlage (20) oder in einem sonstigen Bereich des Dokuments (10) aufgedruckt oder in anderer Weise aufgebracht ist, wobei die vertrauliche Information (5) eine Abfolge mehrerer Zeichen (6) umfasst, und
- mindestens ein zum Schutz gegen Durchleuchten oder anderweitiges Ausspähen der vertraulichen Information (5) dienendes Spähschutzelement (1) mit einem Kontrastmuster (12) und/oder Störmuster (2), das eine Vielzahl von Zeichen aufweist, die dazu bestimmt sind, die Zeichen (6) der vertraulichen Information (15) visuell zu überlagern und/oder von den Zeichen (6) der vertraulichen Information (15) visuell überlagert zu werden, durch gekennzeichnet, dass die mehreren Zeichen (6) der vertraulichen Information (5) in Form eines Captcha-Bildes (15) und/oder als Bestandteile eines Captcha-Bildes (15) aufgedruckt oder aufgebracht sind und die vertrauliche Information (5) und das Spähschutzelement (1) in der Weise übereinanderliegend und/oder einander überdeckend angeordnet oder zumindest bestimmungsgemäß in der Weise übereinanderliegend und/oder einander überdeckend anordenbar sind, dass ein unbefugtes Lesen, Ausspähen oder anderweitiges Ermitteln der vertraulichen Information (5) durch visuelle Überlagerung des Captcha-Bildes (15) mit dem Kontrastmuster (12) und/oder Störmuster (2) erschwert wird.

2. Dokument nach Anspruch 1,
**dadurch gekennzeichnet, dass** das Störmuster (2) und/oder Kontrastmuster (12) in Betrachtungsrichtung vor oder hinter dem Captcha-Bild (15) angeordnet oder zumindest bestimmungsgemäß vor oder hinter dem Captcha-Bild (15) anordenbar ist, um durch visuelle Überlagerung des Captcha-Bildes (15) ein unbefugtes Lesen, Ausspähen oder anderweitiges Ermitteln der vertraulichen Information (5) zu erschweren.

3. Dokument nach Anspruch 1 oder 2,
**dadurch gekennzeichnet, dass** der Abstand oder die Schriftgröße, Schriftart, Schriftstärke, Orientierung, Höhenposition, Verzerrung, grafische Überlappung und/oder grafische Verschmelzung der mehreren Zeichen (7) der vertraulichen Information (5) für jedes Zeichen (7) der Abfolge unterschiedlich oder zumindest innerhalb der Abfolge von Zeichen (7) uneinheitlich gewählt ist, wodurch sich ein unvorhersehbares Druckbild und/oder Schriftbild der vertraulichen Information (5) ergibt.

4. Dokument nach einem der Ansprüche 1 bis 3,
**dadurch gekennzeichnet, dass** die Zeichen (6) der vertraulichen Information (5) alphanumerische Zeichen (7) sind und dass die Zeichen des Kontrastmusters (12) und/oder Störmusters (2) alphanumerische Zeichen sind.

5. Dokument nach einem der Ansprüche 1 bis 4,
**dadurch gekennzeichnet, dass** die vertrauliche Information (5) ein Passwort, ein Kennwort, ein Zugangscode und/oder eine sonstige personenbezogene Zeichenkombination mit persönlichen Daten (25), beispielsweise ein personenbezogener Identifizierungscode, eine Kontonummer, eine Versicherungsnummer, eine Mitgliedsnummer oder eine Teilnehmernummer ist oder umfasst.

6. Dokument nach einem der Ansprüche 1 bis 5,
**dadurch gekennzeichnet, dass** das Spähschutzelement (1) und die vertrauliche Information (5) an dem Dokument (10) voneinander abhebbar angeordnet sind.

7. Dokument nach einem der Ansprüche 1 bis 6,
**dadurch gekennzeichnet, dass** das Dokument (10) ferner ein Etikett, insbesondere ein Spähschutzetikett (4) aufweist, das sich zumindest über einen Flächenbereich (I) des Dokuments (10) und/oder der Druckunterlage (20), in dem die vertrauliche Information (5) angeordnet ist, erstreckt.

8. Dokument nach Anspruch 7,
**dadurch gekennzeichnet, dass** die vertrauliche Information (5) auf einer Seite der Druckunterlage (20) auf den Flächenbereich (I) der Druckunterlage (20) aufgedruckt ist und dass das Spähschutzetikett (4) auf dieser Seite der Druckunterlage (20) zumindest diesen Flächenbereich (I) überspannt und/oder überdeckt,
wobei das Spähschutzetikett (4) in einem den Flächenbereich (I) umgebenden Rahmenbereich (III) oder einem neben dem Flächenbereich (I) angeordneten Randbereich (II) mit der Druckunterlage (20) verklebt ist und in dem Flächenbereich (I) das Spähschutzelement (1) aufweist.

9. Dokument nach einem der Ansprüche 1 bis 8,
**dadurch gekennzeichnet, dass** in dem für die vertrauliche Information (5) bestimmten Flächenbereich (I) des Dokuments (10) ein Spähschutzetikett (4) ausgebildet ist, das sowohl die vertrauliche Information (5) als auch das Spähschutzelement (1) aufweist.

10. Dokument nach einem der Ansprüche 7 bis 9,
**dadurch gekennzeichnet, dass** das Spähschutzetikett (4) zumindest eine transparente Folie (16), insbesondere Kunststofffolie (8) aufweist und
dass das Captcha-Bild (15) mit der vertraulichen Information (5) auf eine zu betrachtende Oberseite der transparenten Folie (16) aufgedruckt und/oder aufgebracht ist,
wohingegen das Störmuster (2) in Höhe unterhalb einer Oberseite der transparenten Folie (16) in oder unter dem Spähschutzetikett (4) oder auf der Druckunterlage (20) ausgebildet und/oder aufgedruckt ist.

11. Dokument nach einem der Ansprüche 7 bis 10,
**dadurch gekennzeichnet, dass** das Spähschutzelement (1) eine durchleuchtungssichere und/oder blickdichte Schicht (3; 13; 23) ist, die zum Lesen der vertraulichen Information (5) zerstörbar und/oder entfernbar, insbesondere abkratzbar oder abrubbelbar ist, und
dass das Spähschutzetikett (4) zumindest eine transparente Folie (17), insbesondere eine Kunststofffolie (18) aufweist, deren eine Seite an die blickdichte Schicht (3) angrenzt und deren andere Seite dem Captcha-Bild (15) zugewandt ist.

12. Dokument nach einem der Ansprüche 7 bis 11,
**dadurch gekennzeichnet, dass** das Spähschutzetikett (4) ein zweiteiliges Etikett ist, das ein Oberetikett (14) und ein Unteretikett (24) umfasst, wobei das Oberetikett (14) von dem Unteretikett (24) und/oder von der Druckunterlage (20) abziehbar oder zumindest bereichsweise abhebbar ist, um das Captcha-Bild (15) mit der vertraulichen Information (5) getrennt von dem Spähschutzelement (1) zu betrachten.

13. Dokument nach Anspruch 12,
**dadurch gekennzeichnet, dass** das Oberetikett (14) und das Unteretikett (24) auf entgegengesetzten Seiten der Druckunterlage (20), beispielsweise eines Papierbogens (30) aufgeklebt sind und dass die Druckunterlage (20) in dem Flächenbereich (I) und/oder entlang eines Rahmenbereichs (III) oder eines oder mehrerer Randbereiche (II) neben dem Flächenbereich (I) zumindest eine Perforierung (31) oder anderweitige Schwächungslinie (32), die ein Trennen des Oberetiketts (14) und des Unteretiketts (24) voneinander ermöglicht, aufweist.

14. Dokument nach einem der Ansprüche 7 bis 13,
**dadurch gekennzeichnet, dass** die Druckunterlage (20) in dem Flächenbereich (I) und/oder entlang eines Rahmenbereichs (III) oder eines oder mehrerer Randbereiche (II) neben dem Flächenbereich (I) eine Perforierung (31) oder anderweitige Schwächungslinie (32) aufweist, die ein Abreißen oder zumindest Abheben der Druckunterlage (20) von einer ihr zugewandten Seite des Spähschutzetiketts (4) ermöglicht.

15. Dokument nach einem der Ansprüche 1 bis 14,
**dadurch gekennzeichnet, dass** die Druckunterlage (20) außerhalb des Feldes (34) oder Flächenbereichs (I) eine ab- oder aufgedruckte oder in sonstiger Weise aufgebrachte Mitteilung (9) in Textform aufweist.

## Claims

1. A document (10) for the spy-proof transmission of confidential information (5), the document (10) comprising at least the following:
- a sheet-like or other flat print substrate (20) made of paper, film or any other material or material composite,
- confidential information (5) to be transmitted in a spy-proof manner, which is printed or otherwise applied in a field (34) or surface area (I) of the document (10) or the print substrate (20) or in another area of the document (10), the confidential information (5) comprising a sequence of several characters (6), and
- at least one spy protection element (1) serving to protect against transillumination or any other spying of the confidential information (5) and having a contrast pattern (12) and/or interference pattern (2) which has a plurality of characters which are intended to visually superimpose the characters (6) of the confidential information (15) and/or to be visually superimposed by the characters (6) of the confidential information (15),
**characterized in that**
the several characters (6) of the confidential information (5) are printed or applied in the form of a captcha image (15) and/or as components of a captcha image (15), and
the confidential information (5) and the spy protection element (1) are arranged one above the other and/or overlapping one another or can be arranged at least in accordance with the intended purpose one above the other and/or overlapping one another in such a way that any unauthorized reading, spying or otherwise determining of the confidential information (5) is impeded by visual superposition of the captcha image (15) with the contrast pattern (12) and/or interference pattern (2).

2. The document according to claim 1,
**characterized in that** the interference pattern (2) and/or contrast pattern (12) is arranged in front of or behind the captcha image (15) in the viewing direction or can be arranged at least in accordance with the intended purpose in front of or behind the captcha image (15) in order to impede any unauthorized reading, spying or otherwise determining of the confidential information (5) by visual superposition of the captcha image (15).

3. The document according to claim 1 or 2,
**characterized in that** the spacing or the font size, font type, font strength, orientation, height position, distortion, graphic overlap and/or graphic fusion of the several characters (7) of the confidential information (5) is chosen to be different for each character (7) of the sequence or at least to be inconsistent within the sequence of characters (7), resulting in an unpredictable print image and/or typeface of the confidential information (5).

4. The document according to any of the claims 1 to 3,
**characterized in that** the characters (6) of the confidential information (5) are alphanumeric characters (7) and that the characters of the contrast pattern (12) and/or interference pattern (2) are alphanumeric characters.

5. The document according to any of the claims 1 to 4,
**characterized in that** the confidential information (5) is or comprises a password, a code word, an access code and/or another personal character combination with personal data (25), for example a personal identification code, an account number, an insurance number, a member number or a subscriber number.

6. The document according to any of the claims 1 to 5,
**characterized in that** the spy protection element (1) and the confidential information (5) are arranged on the document (10) so as to be able to be lifted off from each other.

7. The document according to any of the claims 1 to 6,
**characterized in that** the document (10) further comprises a label, in particular a spy protection label (4), which extends at least over a surface area (I) of the document (10) and/or of the print substrate (20) in which the confidential information (5) is arranged.

8. The document according to claim 7,
**characterized in that** the confidential information (5), on one side of the print substrate (20), is printed on the surface area (I) of the print substrate (20) and **in that** the spy protection label (4) on this side of the print substrate (20) spans and/or covers at least this surface area (I),
wherein the spy protection label (4) is glued to the print substrate (20) in a frame region (III) surrounding the surface area (I) or in an edge region (II) arranged next to the surface area (I) and comprises the spy protection element (1) in the surface area (I).

9. The document according to any of the claims 1 to 8,
**characterized in that** a spy protection label (4) is formed in the surface area (I) of the document (10) intended for the confidential information (5), said spy protection label (4) comprising both the confidential information (5) and the spy protection element (1).

10. The document according to any of the claims 7 to 9,
**characterized in that** the spy protection label (4) comprises at least one transparent film (16), in particular a plastic film (8), and
**in that** the captcha image (15) including the confidential information (5) is printed on and/or applied to an upper side of the transparent film (16) to be viewed,
whereas the interference pattern (2) is formed and/or printed at a level below an upper surface of the transparent film (16) in or below the spy protection label (4) or on the print substrate (20).

11. The document according to any of the claims 7 to 10,
**characterized in that** the spy protection element (I) is a transillumination-proof and/or opaque layer (3; 13; 23) which is destructible and/or removable, in particular can be scraped off or rubbed away, for reading the confidential information (5), and
**in that** the spy protection label (4) has at least one transparent film (17), in particular a plastic film (18), whose one side adjoins the opaque layer (3) and whose other side faces the captcha image (15).

12. The document according to any of the claims 7 to 11,
**characterized in that** the spy protection label (4) is a two-part label comprising an upper label (14) and a lower label (24), wherein the upper label (14) can be peeled off from the lower label (24) and/or from the print substrate (20) or can be lifted off at least in some areas in order to view the captcha image (15) including the confidential information (5) separately from the spy protection element (1) .

13. The document according to claim 12,
**characterized in that** the upper label (14) and the lower label (24) are glued to opposite sides of the print substrate (20), for example a sheet of paper (30), and **in that** the print substrate (20) has at least one perforation (31) or other weakening line (32) in the surface area (I) and/or along a frame region (III) or one or more edge regions (II) next to the surface area (I), said perforation or weakening line allowing the upper label (14) and the lower label (24) to be separated from each other.

14. The document according to any of the claims 7 to 13,
**characterized in that** the print substrate (20) has a perforation (31) or other weakening line (32) in the surface area (I) and/or along a frame region (III) or one or more edge regions (II) next to the surface area (I), said perforation or weakening line allowing the print substrate (20) to be torn off or at least lifted off from a side of the spy protection label (4) facing it.

15. The document according to any of the claims 1 to 14,
**characterized in that** the print substrate (20) outside the field (34) or surface area (I) has a message (9) in text form which is imprinted or printed or otherwise applied thereon.

## Revendications

1. Document (10) destiné à transmettre une information confidentielle (5) de manière sécurisée contre l'espionnage, sachant que le document (10) présente au moins ce qui suit :
- un support d'impression (20) plan en forme de feuille ou autre, en papier, film ou autre matériau ou matériau composite,
- une information confidentielle (5) à transmettre de manière sécurisée contre l'espionnage, qui est imprimée ou appliquée d'une autre manière dans un champ (34) ou une zone de surface (I) du document (10) ou du support d'impression (20) ou dans une autre zone du document (10), sachant que l'information confidentielle (5) comprend une suite de plusieurs caractères (6), et
- au moins un élément de protection contre l'espionnage (1) servant à protéger l'information confidentielle (5) contre un éclairage par transparence ou autre espionnage, présentant un motif de contraste (12) et/ou un motif parasite (2) qui présente une pluralité de caractères qui sont destinés à chevaucher visuellement les caractères (6) de l'information confidentielle (15) et/ou à être chevauchés visuellement par les caractères (6) de l'information confidentielle (15),
**caractérisé en ce que**
les plusieurs caractères (6) de l'information confidentielle (5) sont imprimés ou appliqués sous forme d'une image captcha (15) et/ou comme éléments d'une image captcha (15) et
l'information confidentielle (5) et l'élément de protection contre l'espionnage (1) sont disposés de manière superposée et/ou se recouvrant ou sont au moins aptes à être disposés de manière superposée et/ou se recouvrant conformément à l'utilisation prévue de telle manière qu'une lecture, un espionnage ou autre identification illicites de l'information confidentielle (5) soient entravés par chevauchement visuel de l'image captcha (15) avec le motif de contraste (12) et/ou le motif parasite (2).

2. Document selon la revendication 1,
**caractérisé en ce que** le motif parasite (2) et/ou le motif de contraste (12) sont disposés devant ou derrière l'image captcha (15) en direction d'observation ou sont au moins aptes à être disposés devant ou derrière l'image captcha (15) en direction d'observation conformément à l'utilisation prévue pour entraver, par chevauchement visuel de l'image captcha (15), une lecture, un espionnage ou autre identification illicites de l'information confidentielle (5).

3. Document selon la revendication 1 ou 2,
**caractérisé en ce que** l'écartement ou la taille de caractère, la police, l'épaisseur de trait, l'orientation, la position de hauteur, la distorsion, le chevauchement graphique et/ou la fusion graphique des plusieurs caractères (7) de l'information confidentielle (5) pour chaque caractère (7) de la suite sont choisis de manière différente ou, du moins au sein de la suite de caractères (7), de manière hétéroclite, ce qui a pour effet de donner une image d'impression et/ou une typographie imprévisibles de l'information confidentielle (5).

4. Document selon l'une des revendications 1 à 3,
**caractérisé en ce que** les caractères (6) de l'information confidentielle (5) sont des caractères alphanumériques (7) et **en ce que** les caractères du motif de contraste (12) et/ou du motif parasite (2) sont des caractères alphanumériques.

5. Document selon l'une des revendications 1 à 4,
**caractérisé en ce que** l'information confidentielle (5) est ou comprend un mot de passe, un mode de code, un code d'accès et/ou autre combinaison de caractères liée à la personne avec des données personnelles (25), par exemple un code d'identification lié à la personne, un numéro de compte, un numéro d'assurance, un numéro de membre ou un numéro de participant.

6. Document selon l'une des revendications 1 à 5,
**caractérisé en ce que** l'élément de protection contre l'espionnage (1) et l'information confidentielle (5) sont disposés sur le document (10) de manière à pouvoir être détachés l'un de l'autre.

7. Document selon l'une des revendications 1 à 6,
**caractérisé en ce que** le document (10) présente en outre une étiquette, en particulier une étiquette de protection contre l'espionnage (4), qui s'étend au moins sur une zone de surface (I) du document (10) et/ou du support d'impression (20) dans laquelle l'information confidentielle (5) est disposée.

8. Document selon la revendication 7,
**caractérisé en ce que** l'information confidentielle (5) est imprimée sur la zone de surface (I) du support d'impression (20) d'un côté du support d'impression (20) et **en ce que** l'étiquette de protection contre l'espionnage (4) enjambe et/ou recouvre au moins cette zone de surface (I) de ce côté du support d'impression (20),
sachant que l'étiquette de protection contre l'espionnage (4) est collée au support d'impression (20) dans une zone de cadre (III) entourant la zone de surface (I) ou dans une zone de bord (II) disposée à côté de la zone de surface (I) et présente l'élément de protection contre l'espionnage (1) dans la zone de surface (I).

9. Document selon l'une des revendications 1 à 8,
**caractérisé en ce qu'**une étiquette de protection contre l'espionnage (4) qui présente à la fois l'information confidentielle (5) et l'élément de protection contre l'espionnage (1) est constituée dans la zone de surface (I) du document (10) qui est destinée à l'information confidentielle (5).

10. Document selon l'une des revendications 7 à 9,
**caractérisé en ce que** l'étiquette de protection contre l'espionnage (4) présente au moins un film transparent (16), en particulier un film plastique (8), et
**en ce que** l'image captcha (15) est imprimée et/ou appliquée avec l'information confidentielle (5) sur une face supérieure à observer du film transparent (16),
le motif parasite (2) étant en revanche constitué et/ou imprimé à une hauteur située sous une face supérieure du film transparent (16) dans ou sous l'étiquette de protection contre l'espionnage (4) ou sur le support d'impression (20).

11. Document selon l'une des revendications 7 à 10,
**caractérisé en ce que** l'élément de protection contre l'espionnage (1) est une couche protégée contre un éclairage par transparence et/ou opaque (3 ; 13 ; 23) qui peut être détruite et/ou enlevée, en particulier grattée ou gommée, pour la lecture de l'information confidentielle (5), et
**en ce que** l'étiquette de protection contre l'espionnage (4) présente au moins un film transparent (17), en particulier un film plastique (18), dont un côté jouxte la couche opaque (3) et l'autre côté est tourné vers l'image captcha (15).

12. Document selon l'une des revendications 7 à 11,
**caractérisé en ce que** l'étiquette de protection contre l'espionnage (4) est une étiquette en deux parties qui comprend une étiquette supérieure (14) et une étiquette inférieure (24), sachant que l'étiquette supérieure (14) peut être retirée ou au moins détachée partiellement de l'étiquette inférieure (24) et/ou du support d'impression (20) pour observer l'image captcha (15) avec l'information confidentielle (5) séparément de l'élément de protection contre l'espionnage (1).

13. Document selon la revendication 12,
**caractérisé en ce que** l'étiquette supérieure (14) et l'étiquette inférieure (24) sont collées de côtés opposés du support d'impression (20), par exemple d'un coupon en papier (30), et **en ce que** le support d'impression (20) présente, dans la zone de surface (I) et/ou le long d'une zone de cadre (III) ou d'une ou de plusieurs zones de bord (II) à côté de la zone de surface (I), au moins une perforation (31) ou autre ligne d'affaiblissement (32) qui permet de séparer l'étiquette supérieure (14) et l'étiquette inférieure (24) l'une de l'autre.

14. Document selon l'une des revendications 7 à 13,
**caractérisé en ce que** le support d'impression (20) présente, dans la zone de surface (I) et/ou le long d'une zone de cadre (III) ou d'une ou de plusieurs zones de bord (II) à côté de la zone de surface (I), une perforation (31) ou autre ligne d'affaiblissement (32) qui permet de déchirer ou au moins de détacher le support d'impression (20) d'un côté tourné vers lui de l'étiquette de protection contre l'espionnage (4).

15. Document selon l'une des revendications 1 à 14,
**caractérisé en ce que** le support d'impression (20) présente, à l'extérieur du champ (34) ou de la zone de surface (I), un communiqué (9) sous forme de texte recopié ou imprimé ou appliqué d'une autre manière.
